(19) Europäisches Patentamt
European Patent Office
Office européen des brevets

(11) Numéro de publication: **0 201 434 B1**

(12) **FASCICULE DE BREVET EUROPEEN**

(45) Date de publication du fascicule du brevet: **23.01.91**

(51) Int. Cl.[5]: **C 08 G 69/40**, C 08 G 69/34

(21) Numéro de dépôt: **86420086.0**

(22) Date de dépôt: **25.03.86**

(54) **Copolyétheramides techniques souples à basse température.**

(30) Priorité: **28.03.85 FR 8504954**

(43) Date de publication de la demande:
**12.11.86 Bulletin 86/46**

(45) Mention de la délivrance du brevet:
**23.01.91 Bulletin 91/04**

(84) Etats contractants désignés:
**AT BE CH DE GB IT LI LU NL SE**

(56) Documents cités:
**WO-A-81/00719**
**FR-A-2 253 778**
**FR-A-2 470 141**
**US-A-3 499 853**
**US-A-4 062 820**

**Le dossier contient des informations techniques présentées postérieurement au dépôt de la demande et ne figurant pas dans le présent fascicule.**

(73) Titulaire: **RHONE-POULENC CHIMIE**
**25, quai Paul Doumer**
**F-92408 Courbevoie Cédex (FR)**

(72) Inventeur: **Coquard, Jean**
**Route du Crest**
**F-69290 Grezieu-la-Varenne (FR)**
Inventeur: **Goletto, Jean**
**24, Chemin des Mouilles**
**F-69130 Ecully (FR)**

(74) Mandataire: **Trolliet, Maurice et al**
**RHONE-POULENC INTERSERVICES Service Brevets Chimie Centre de Recherches de Saint-Fons B.P. 62**
**F-69192 Saint-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 201 434 B1

Courier Press, Leamington Spa, England.

## Description

La présente invention concerne des copolyétheramides souples homogènes, à structure bloc, obtenus à partir (1) de monomères (diacides carboxyliques à chaîne courte et diamines aliphatiques à chaîne courte) générateurs de blocs amides cristallins, (2) de diacides polymères ou de dérivés aminés de diacides polymères et (3) de polyoxyalkylènediamines ou d'acides polyoxyalkylènedicarboxyliques.

Pour certaines applications des matières plastiques on a besoin de polymères présentant un ensemble de propriétés chimiques et physiques que l'on peut trouver partiellement dans les polyamides. A la résistance chimique et aux bonnes propriétés de tenue thermique des polyamides conventionnels obtenus par polycondensation de diacides carboxyliques aliphatiques saturés courts avec des diamines primaires aliphatiques saturées courtes, il peut être nécessaire d'ajouter des propriétés de souplesse. De nombreux copolymères ont été proposés dans ce but mais on obtient rarement l'ensemble des propriétés recherchées.

Il a été décrit dans le brevet américain 4 218 351 des copolyétheramides, contenant des blocs amides cristallins (capables d'apporter les bonnes propriétés de tenue thermique souhaitées) issus de diacides carboxyliques à chaîne courte et de diamines à chaîne courte, qui sont aptes à présenter une bonne souplesse notamment à basse température. Ces polyétheramides sont obtenus par réaction directe (1) d'un mélange d'un diacide carboxylique à chaîne courte et d'une diamine à chaîne courte avec (2) un dimère d'acide gras ou un dérivé aminé de dimère d'acide gras et avec (3) une polyoxyalkylènediamine ou un acide polyoxyalkylènedicarboxylique. On a cependant constaté, en opérant comme il est indiqué dans ce brevet, que les copolymères ainsi obtenus présentent le défaut de ne pas être homogènes, avec comme conséquences néfastes, d'une part l'obtention de propriétés qui n'atteignent pas les valeurs élevées souhaitées compatibles avec un usage des copolymères comme plastiques techniques et d'autre part une grande difficulté pour reproduire les structures conduisant à des objets conformés de grande régularité.

Il a maintenant été trouvé, et c'est ce qui constitue l'objet principal de la présente invention, des copolyétheramides souples comprenant des blocs amides cristallins issus de diacides carboxyliques à chaîne courte et de diamines à chaîne courte qui sont homogènes.

Plus spécifiquement, la présente invention concerne des copolyétheramides à structure bloc, préparés à partir de diacides carboxyliques à chaîne courte, de diamines à chaîne courte, de diacides polymères ou de leurs dérivés aminés et de polyoxyalkylènediamines ou d'acides polyoxyalkylènedicarboxyliques, présentant notamment un point de fusion ou de ramollissement au moins égal à 150°C, une température de transition vitreuse mesurée à EHO au plus égale à −5°C et une viscosité à l'état fondu mesurée dans les conditions définies ci-après au moins égale à 100 poises, lesdits copolyétheramides étant caractérisés en ce qu'ils sont homogènes et qu'ils sont susceptibles d'être obtenus conformément au mode opératoire défini par les points suivants:

. dans une première étape, on prépare un prépolymère par chauffage des réactifs consistant:

— soit dans un mélange des espèces ci-après désignées:

(a)—au moins un diacide carboxylique aliphatique saturé à chaîne courte ayant de 2 à 7 atomes de carbone,

(b)—éventuellement au moins un diacide carboxylique à chaîne courte de nature cycloaliphatique saturée ou aromatique ayant au plus 16 atomes de carbone,

(c)—au moins une diamine primaire aliphatique saturée à chaîne courte ayant de 2 à 7 atomes de carbone,

et (d)—au moins un diacide polymère consistant dans un acide dimère obtenu par fractionnement d'une composition hydrogénée issue de la polymérisation catalytique d'acide(s) gras monomère(s) ayant 18 atomes de carbone ou (d') au moins un dérivé aminé de diacide polymère ou (e') au moins un acide polyoxyalkylènedicarboxylique,

les proportions des réactifs (a), éventuellement (b) et (c) étant choisies de manière à apporter des nombres de groupes $NH_2$ et COOH équivalents,

— soit dans le mélangé d'au moins un sel dérivé des réactifs (a)+éventuellement (b)+(c) avec le réactif (d) ou (d') ou (e');

. puis dans une seconde étape, on fait réagir le prépolymère maintenu à une température au moins égale à la température de prépolymérisation:

— soit, dans le cas où le prépolymère est préparé à partir de diacide(s) polymère(s) (d), avec (e) au moins une polyoxyalkylènediamine,

— soit, dans le cas où le prépolymère est préparé à partir de dérivé(s) aminé(s) de diacide(s) polymère(s) (d'), avec (e') au moins un acide polyoxyalkylènedicarboxylique,

— soit, dans le cas où le prépolymère est préparé a partir d'acide(s) polyoxyalkylènedicarboxylique(s) (é), avec (d') au moins un dérivé aminé de diacide polymère,

— cette réaction étant conduite, pendant une durée suffisante pour obtenir le copolymère de propriétés souhaitées, en présence d'un catalyseur (f) consistant soit en un composé (alpha), soit en un composé (béta), (alpha) désignant un oxyacide minéral ou un oxyacide organique autre qu'un acide carboxylique, dont l'une au moins des fonctions acides, quand il y en a plusieurs, possède une constante d'ionisation pka dans l'eau à 25°C égale ou inférieure à 4, (béta) désignant un sel alcalin ou alcalino-terreux de cet acide,

— le réactif à ponts éthers (e) ou (e') consistant:

(i)—soit dans une ou plusieurs polyoxyalkylènediamine(s) ou dans un ou plusieurs acide(s) polyoxyalkylènedicarboxylique(s) ayant chacun d'une part une masse moléculaire moyenne en nombre qui se situe dans l'intervalle allant de 400 à 1000 et d'autre part au plus 10% en poids de chaînes possédant une masse moléculaire supérieure à 1000,

(ii)—soit dans un mélange d'une ou plusieurs polyoxyalkylènediamine(s) ou d'un ou plusieurs acide(s) polyoxyalkylènedicarboxylique(s) tels que définis sous (i) avec au plus 10% en poids par rapport au mélange, respectivement, d'une ou plusieurs polyoxyalkylènediamine(s) de même nature ou d'un ou plusieurs acide(s) polyoxyalkylènedicarboxylique(s) de même nature ayant chacun une masse moléculaire moyenne en nombre supérieure à 1200 et au plus égale à 10000,

(iii)—lesdits polyoxyalkylènediamine(s) et acide(s) polyoxyalkylènedicarboxylique(s) étant choisis dans le groupe formé par:

+ les polyoxyéthylènediamines, polyoxypropylènediamines, polyoxytétraméthylènediamines et les acides polyoxyéthylènedicarboxyliques, polyoxypropylènedicarboxyliques, polyoxytétraméthylènedicarboxyliques représentés par la formule:

$$X—R_1—(OR_2)_n—OR_3—X— \quad (I)$$

dans laquelle:

. les symboles X représentent un groupe $NH_2$ ou un groupe COOH,

. les symboles $R_1$, $R_2$ et $R_3$ répondent aux définitions suivantes:

pour les espèces polyoxyéthylène

$$R_1=R_3=—\underset{|}{\overset{CH_3}{C}}H—CH_2—$$

et

$$R_2=—CH_2—CH_2—;$$

pour les espèces polyoxypropylène

$$R_1=R_2=R_3=—\underset{|}{\overset{CH_3}{C}}H—CH_2—;$$

pour les espèces polyoxytétraméthylène

$$R_1=R_3=—\underset{|}{\overset{CH_3}{C}}H—CH_2—$$

et

$$R_2=—CH_2—CH_2—CH_2—CH_2—,$$

. le symbole n est un nombre déterminé de manière à procurer des composés 15 à ponts éthers ayant les spécifications en matière de masse moléculaire indiquées ci-avant des les points (i) et (ii), et

+ les composés obtenus par réaction d'une polyoxyalkylènediamine de formule (I) avec un défaut d'un diacide polymère (d) ou d'un acide polyoxyalkylènedicarboxylique de formule (I), ainsi encore que les composés obtenus par réaction d'un acide polyoxyalkylènedicarboxylique de formule (I) avec un défaut de dérivé aminé (d') d'un diacide polymère ou d'une polyoxyalkylènediamine de formule (I), lesdits composés de réaction obtenus ayant les spécifications en matière de masse moléculaire indiquées ci-avant dans les points (i) et (ii),

— les proportions du réactif adéquat (e) ou (e') ou (d') étant choisies en relation avec les proportions des réactifs mis en oeuvre dans la première étape de manière à ce que les nombres de groupes $NH_2$ et COOH présents dans le mélange réactionnel de la seconde étape soient équivalents.

La présente invention concerne encore des copolyétheramides à structure bloc, présentant les propriétés énoncées ci-avant, caractérisées en ce qu'ils sont homogènes et qu'ils sont susceptibles d'être obtenus conformément au mode opératoire défini par les points suivants:

. dans une première étape, on prépare un prépolymère par chauffage des réactifs consistant dans les mélanges suivants:

— ($m_1$) soit:

(a) au moins un diacide carboxylique aliphatique saturé à chaîne courte ayant de 2 à 7 atomes de carbone,

(b) éventuellement au moins un diacide carboxylique à chaîne courte de nature cycloaliphatique saturée ou aromatique ayant un plus 16 atomes de carbone,

(d) au moins un diacide polymère consistant dans un acide dimère obtenu par fractionnement d'une composition hydrogénée issue de la polymérisation catalytique d'acide(s) gras monomère(s) ayant 18 atomes de carbone, et

(e) au moins une polyoxyalkylènediamine,

— ($m_2$) soit:

le réactif (a) précité, éventuellement le réactif (b) précité, (d') au moins un dérivé aminé de diacide polymère, et

(e') au moins un acide polyoxyalkylènedicarboxylique,

— ($m_3$) soit:

éventuellement le réactif (b) précité, (c) au moins une diamine primaire aliphatique saturée à chaîne courte ayant de 2 à 7 atomes de carbone, le réactif (d) précité, et le réactif (e) précité,

— ($m_4$) soit:

éventuellement le réactif (b) précité, le réactif (c) précité, le réactif (d') précité, et le réactif (e') précité,

— les propositions des réactifs (d), (e) et éventuellement (b) ou (d'), (e') et éventuellement (b) étant choisies de manière à apporter des nombres de groupes $NH_2$ et COOH équivalents;

. puis dans une seconde étape on fait réagir le prépolymère maintenu à une température au moins égale à la température de prépolymérisation:

— soit, dans le cas où le prépolymère est préparé à partir des mélanges ($m_1$) ou ($m_2$), avec le réactif (c) précité, soit, dans le cas où le prépolymère est préparé à partir des mélanges ($m_3$) ou ($m_4$), avec le réactif (c) précité,

— cette réaction étant conduite, pendant une durée suffisante pour obtenir le copolymère de propriétés souhaitées, en présence d'un catalyseur (f) consistant soit en un composé (alpha), soit en un composé (béta), (alpha) désignant un oxyacide minéral ou un oxyiacide organique autre qu'un acide carboxylique, dont l'une au moins des fonctions acides, quand il y en a plusieurs, possède une constante d'ionisation pka dans l'eau à 25°C égale ou inférieure à 4, (béta) désignant un sel alcalin ou alcalino-terreux de cet acide,

— le réactif à ponts éthers (e) ou (e') consistant:

(i)—soit dans une ou plusieurs polyoxyalkylènediamine(s) ou dans un ou plusieurs acide(s) polyoxyalkylènedicarboxylique(s) ayant chacun d'une part une masse moléculaire moyenne en nombre qui se situe dans l'intervalle allant de 400 à 1000 et d'autre part au plus 10% en poids de chaînes possédant une masse moléculaire supérieur à 1000,

(ii)—soit dans un mélange d'une ou plusieurs polyoxyalkylènediamine(s) ou d'un ou plusieurs acide(s) polyoxyalkylènedicarboxylique(s) tels que définis sous (i) avec au plus 10% en poids par rapport au mélange, respectivement, d'une ou plusieurs polyoxyalkylènediamine(s) de même nature ou d'un ou plusieurs acide(s) polyoxyalkylènedicarboxylique(s) de même nature ayant chacun une masse moléculaire moyenne en nombre supérieure à 1200 et au plus égale à 10000,

(iii)—lesdits polyoxyalkylènediamine(s) et acide(s) polyoxyalkylènedicarboxylique(s) étant choisis dans le groupe formé par:

+ les polyoxyéthylènediamines, polyoxypropylènediamines, polyoxytétraméthylènediamines et les acides polyoxyéthylènedicarboxyliques, polyoxypropylènedicarboxyliques, polyoxytétraméthylènedicarboxyliques représentés par la formule:

$$X—R_1—(OR_2)_n—OR_3—X— \qquad (I)$$

dans laquelle:

. les symboles X représentent un groupe $NH_2$ ou un groupe COOH,

. les symboles $R_1$, $R_2$ et $R_3$ répondent aux définitions suivantes: pour les espèces polyoxyéthylène

$$R_1=R_3=—\underset{}{\overset{\overset{\displaystyle CH_3}{|}}{C}H}—CH_2—$$

et

$$R_2=—CH_2—CH_2—;$$

pour les espèces polyoxypropylène

$$R_1=R_2=R_3=—\overset{\overset{\displaystyle CH_3}{|}}{C}H—CH_2—;$$

pour les espèces polyoxytétraméthylène

$$R_1=R_3=—\overset{\overset{\displaystyle CH_3}{|}}{C}H—CH_2—$$

et

$R_2$=—$CH_2$—$CH_2$—$CH_2$—$CH_2$—,

. le symbole n est un nombre déterminé de manière à procurer des composés à ponts éthers ayant les spécifications en matière de masse moléculaire indiquées ci-avant dans les points (i) et (ii), et

+ les composés obtenus par réaction d'une polyoxyalkylènediamine de formule (I) avec un défaut d'un diacide polymère (d) ou d'un acide polyoxyalkylènedicarboxylique de formule (I), ainsi encore que les composés obtenus par réaction d'un acide polyoxyalkylènedicarboxylique de formule (I) avec un défaut de dérivé aminé (d') d'un diacide polymère ou d'une polyoxyalkylènediamine de formule (I), lesdits composés de réaction obtenus ayant les spécifications en matière de masse moléculaire indiquées ci-avant dans les points (i) et (ii),

— les proportions du réactif adéquat (c) ou (a) étant choisies en relation avec les proportions des réactifs mis en oeuvre dans la qremière étape de manière à ce que les nombres de groupes $NH_2$ et COOH présents dans le mélange réactionnel de la seconde étape soient équivalents.

Par copolyétheramide homogène on entend un copolymère ne présentant qu'une phase à l'état fondu. Un moyen pour constater cette homogénéité consiste à observer l'état de transparence d'une masse fondue ayant environ de 0,2 à 0,5 cm d'épaisseur chauffée à une température supérieure d'au moins 10°C à son point de fusion.

Parmi les copolyétheramides homogènes, on peut distinguer:

— des copolyétheramides présentant à l'état solide, une seule phase amorphe qui, après fixation d'acide phosphotungstique, se révèlent parfaitement uniformes par microscopie électronique à balayage jusqu'à des grossissements atteignant 30000. Les films ou joncs de faible diamètre obtenus par refroidissement rapide de ces polymères sont transparents;

— des copolyétheramides présentant une séparation en microdomaines lors du passage à l'état solide, qui, après fixation d'acide phosphotungstique, révèlent par microscopie électronique à balayage une microphase dispersée en inclusions de dimensions généralement inférieures à 0.2 μm (2000 Å). les films ou joncs de faible diamètre obtenus par refroidissement rapide de ces polymères sont translucides ou "laiteux".

Par opposition les copolyétheramides hétérogènes tels qu'on les obtient par le procédé décrit dans le brevet américain 4 218 351, se présentent à l'état fondu comme des masses troubles ou franchement opaques et révèlent, à l'état solide, après fixation d'acide phosphotungstique, par microscopie électronique à balayage, des hétérogénéités dont les dimensions vont d'environ 1 μm à plusieurs dizaines ou même plusieurs centaines de μm.

Les diacides carboxyliques aliphatiques saturés à chaîne courte (a) entrant dans le cadre de l'invention définie ci-avant sont des composés ayant de 2 à 17 atomes de carbone. A titre d'illustration de diacides (a) qui conviennent, on citera par exemple: l'acide succinique, l'acide glutarique, l'acide adipique, l'acide pimélique.

Les diacides carboxyliques cycloaliphatiques ou aromatiques (b) pouvant entrer dans le cadre de l'invention définie ci-avant sont des composés ayant uu plus 16 atomes de carbone. A titre d'illustration de diacides (b) qui conviennent, on citera par exemple: l'acide cyclohexanedicarboxylique-1,4, l'acide téréphtalique, l'acide isophtalique. Les proportions des diacides courts (a), dans les mélanges de diacides courts (a)+(b) qui peuvent être mis en oeuvre, représentent habituellement au moins 60% en mole.

Les diamines primaires aliphatiques saturées à chaîne courte (c) entrant dans le cadre de l'invention définie ci-avant sont des composés ayant aussi de 2 à 7 atomes de carbone. A titre d'illustration des diamines (c) qui conviennent, on citera par exemple: l'éthylènediamine, l'hexaméthylènediamine.

Les diacides polymères (d) visés dans le cadre de la présente invention sont des dimères d'acides gras obtenus par fractionnement d'une composition hydrogénée issue de la polymérisation catalytique d'acide(s) gras monomère(s) ayant 18 atomes de carbone; dans ce contexte, en raison de leur facilité d'approvisionnement et de leur polymérisation relativement aisée, les acides oléique, linoléique et linolénique, pris seuls ou deux à deux ou sous forme de mélange ternaire, sont les produits de départ tout particulièrement visés pour la préparation de l'acide dimère.

Les acides gras polymères obtenus par polymérisation à la chaleur, en présence de catalyseurs comme des peroxydes ou des acides de Lewis, sont fractionnés par exemple par des techniques classiques de distillation sous vide ou d'extraction par des solvants. On peut aussi les hydrogéner pour réduire leur taux d'insaturation et ainsi réduire leur coloration.

Les acides dimères utilisés de préference dans la présente invention sont des acides gras polymères fractionnés dans lesquels la fraction en acide difonctionnel est supérieure à 94% en poids, la fraction en acide monofonctionnel est inférieure à 1% en poids, et plus préférentiellement encore égale ou inférieure à 0,5% en poids, la fraction en acide de fonctionnalité supérieure à 2 est inférieure à 5% en poids et plus préférentiellement encore égale ou inférieure à 3% en poids.

Les acides dimères utilisés plus préférentiellement encore sont les espèces obtenues par fractionnement (conduisant aux fractions indiquées ci-avant) d'acides gras polymères ayant subi en plus une hydrogénation.

S'agissant des dérivés aminés (d') de diacides polymères, ils peuvent être préparés de manière connue en soi, par exemple par réaction des groupes acides du diacide polymère avec de l'ammoniac pour former un nitrile qui est ensuite réduit en amine di-primaire.

Pour ce qui est de l'oxyacide minéral ou organique fort (alpha) qui est engagé comme catalyseur (f) on fait appel, comme il est indiqué ci-avant, à un mono- ou un polyacide oxygéné dont l'une au moins des fonctions acides posséde une constante d'ionisation pka dans l'eau à 25°C égale ou inférieure à 4.

Comme acides forts qui conviennent ou peut citer par exemple:

— parmi les oxyacides minéraux: les acides sulfureux, sulfurique, hypophosphoreux, phosphoreux, orthophosphorique ou pyrophosphorique;

— parmi les oxyacides organiques:

. les acides organosulfoniques de formule:

$$R_4—SO_3H \qquad (II)$$

dans laquelle $R_4$ représente: un radical alkyle linéaire ou ramifié ayant de 1 à 6 atomes de carbone; un radical phényle éventuellement substitué par 1 à 3 radicaux alkyles ayant de 1 à 3 atomes de carbone; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone; ou un radical naphtyle éventuellement substitué par 1 à 4 radicaux alkyles ayant de 1 à 3 atomes de carbone;

. les acides organophosphoniques de formule:

$$R_5—P(O)(OH)_2 \qquad (III)$$

dans laquelle $R_5$ représente un radical alkyle, un radical phényle ou un radical phénylalkyle, chacun de ces radicaux ayant la définition donnée ci-avant pour $R_4$;

. acides organophosphiniques de formule:

$$R_6R_7—P(O)(OH) \qquad (IV)$$

dans laquelle $R_6$ et $R_7$, identiques ou différents, représentent chacun: un radical alkyle linéaire ayant de 1 à 3 atomes de carbone; un radical phényle ou un radical phénylalkyle, chacun de ces deux derniers radicaux ayant la définition donnée ci-avant pour $R_4$;

. les acides organophosphoneux de formule:

$$R_8H—P(O)(OH) \qquad (V)$$

dans laquelle $R_8$ représente: un radical alkyle linéaire ou ramifié ayant de 1 à 4 atomes de carbone (la ramification étant exclue pour un radical alkyle à 4 atomes de carbone); un radical phényle ou un radical phénylalkyle, chacun de ces deux derniers radicaux ayant la définition donnée ci-avant pour $R_4$.

On préfère utiliser comme acide fort (alpha), les acides dérivés du phosphore et plus particulièrement les acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

Pour ce qui est du sel d'acide (béta), on fait appel généralement à des sels de métaux alcalins ou de métaux alcalino-terreux dérivés des oxyacides minéraux ou organiques (alpha).

On préfère utiliser comme sel (béta), ceux qui sont totalement solubles dans le mélange réactionnel. Parmi ces sels (béta) préférés, conviennent bien les sels de sodium et de potassium issus des types particuliers d'oxyacides minéraux ou organiques (alpha) qui conviennent cités ci-avant. Les sels (béta) qui conviennent tout particulièrement bien sont les sels de sodium et de potassium issus des acides préférés dérivés du phosphore cités nommément ci-avant.

Les proportions d'acide fort (alpha) ou de sel (béta), exprimées en pourcentage en poids par rapport au copolyétheramide final, sont comprises généralement entre 0,01 et 1% et de préférence entre 0,01 et 0,5%.

Les copolyétheramides conformes à la présente invention qui sont préférés sont les copolymères dérivant d'un prépolymère préparé à partir des réactifs (a)+éventuellement (b)+(c)+(d) ou (d') ou (e').

Parmi les copolyétheramides appartenant à ce groupe préféré, ceux qui sont spécialement préférés sont les copolymères préparés à partir des réactifs (a)+(c)+(d) ou (d')+(e) ou (e').

Parmi les copolyétheramides appartenant à ce groupe spècialement préféré, ceux qui conviennent tout particulièrement sont les copolymères préparés à partir de la combinaison de réactifs (a)+(c) suivante: acide adipique+hexaméthylènediamine, composés étant pris à l'état libre ou sous forme de leur sel.

S'agissant de la manière d'obtenir les copolyétheramides selon la présente invention, on fera noter que la préparation du prépolymère s'effectue généralement en chauffant l'ensemble des réactifs à une température choisie dans l'intervalle allant de 220 à 300°C, en opérant sous la pression atmosphérique ou sous une pression supérieure pendant une duréee variable allant par exemple de 10 minutes à 4 heures et en éliminant par distillation régulière l'eau présente dans le mélange réactionnel de façon à assurer un taux d'amidification au moins égal à 80% du taux d'amidification maximal accessible à partir des réactifs engagés. Dans le cas des copolyétheramides préférés visés ci-avant dans la page 12, les prépolymères sont

préparés avantageusement en partant du mélange de sel(s) dérive(s) des réactifs (a)+éventuellement (b)+(c) avec le réactif (d) ou (d') ou (e'); la stoechiométrie du (ou des) sel(s) peut être contrôlée et ajustée par mesure du pH de solutions échantillons obtenues par dissolution du (ou des) sel(s) dans un solvant approprié. Avant de passer à l'étape suivante, il peut être avantageux d'établir une pression réduite de manière à atteindre progressivement une valeur inférieure à $50 \cdot 10^2$ Pa et de maintenir le mélange réactionnel à la température de prépolymérisation sous cette pression réduite pendant une durée allant par exemple de 5 minutes à 1 heure, la pression atmosphérique étant ensuite ré-installée.

Les copolyétheramides conformes à la présente invention sont obtenus en coulant ensuite progressivement dans le prépolymère, auquel on ajoute le catalyseur (f) et maintenu à la température de prépolymérisation choisie pour conduire la première étape ou porté à une température supérieure qui n'excèdera pas cependant 300°C, la totalité du réactif adéquat c'est-à-dire (e) ou (e') ou (d') dans le cas des copolyamides préférés visés ci-avant à la page 12 nécessaire pour atteindre la stoechiométrie. Cette opération est conduite sous la pression atmosphérique. Selon une autre modalité opératoire, on peut couler progressivement dans le prépolymère une quantité du réactif adéquat qui est en défaut d'environ 5 à 30% en poids par rapport à la quantité théoriquement nécessaire pour réaliser la stoechiométrie. Après la coulée, totale ou partielle, on peut continuer l'agitation du mélange réactionnel à la température précitée et sous la pression atmosphérique pendant une durée variable allant par exemple de 10 minutes à 1 heure. La réaction est ensuite achevée en établissant une pression réduite de manière à atteindre progressivement une valeur inférieure à $200 \cdot 10^2$ Pa et en terminant le cas échéant l'ajout du réactif adéquat en défaut pour atteindre la stoechiométrie, la température étant maintenue à la valeur précités et la durée de cette dernière phase pouvant varier par exemple de 10 minutes à 2 heures.

Les copolyétheramides selon la présente invention peuvent bien entendu être modifiés par l'ajout, par exemple dans leur milieu de préparation, d'un ou plusieurs additifs tels que notamment: des stabilisants et des inhibiteurs de dégradation par oxydation, par l'ultraviolet, par la lumière ou par la chaleur; des lubrifiants; des matières colorantes; des agents de nucléation; des agents anti-mousse; des additifs minéraux ou des charges de renforcement.

Dans les copolyétheramides selon la présente invention, la cristallinité et par conséquent la cohésion et la faculté d'obtenir des points de fusion élevés et une bonne conservation des propriétés mécaniques en fonction de la température sont apportées par les blocs amides, par blocs amides on entend désigner essentiellement l'ensemble des segments qui dérivent de la condensation des molécules de diacide(s) court(s), (a)+éventuellement (b), sur les molécules de diamine(s) courte(s) (c). La possibilité d'obtenir une Tg aussi basse que possible et par conséquent la faculté d'avoir une souplesse et une élasticité importantes sont apportées par les blocs éthers; par blocs éthers on entend désigner essentiellement l'ensemble des segments qui dérivent de la condensation soit des molécules de diacide(s) polymère(s) (d) sur les molécules de polyoxyalkylènediamine(s) (e), soit des molécules d'amine(s) dérivée(s) de diacide(s) polymère(s) (d') sur les molécules d'acide(s) polyoxyalkylènedicarboxylique(s) (e').

En modifiant les proportions respectives des blocs amides et des blocs éthers dans le copolyétheramide final, on peut faire varier dans de larges limites la souplesse et l'élasticité du polymère obtenu. Un bon compromis en matière de cristallinité, de souplesse et d'élasticité peut être trouvé pour des proportions pondérales de blocs amides dans le polymère final comprises entre 15 et 85% et de préférence entre 40 et 60% et pour des proportions pondérales de blocs éthers comprises entre 85 et 15% et de préférence entre 60 et 40%. Les quantités de réactifs mis en oeuvre sont bien entendu déterminées de manière à obtenir un copolyétheramide présentant de pareilles proportions pondérales de blocs amides et de blocs éthers; pour le calcul de ces proportions pondérales, on considère que les blocs amides et les blocs éthers dérivent des diacides et des diamines par perte d'une mole d'eau par groupe COOH réagissant avec un groupe $NH_2$.

On a trouvé, et cela de manière totalement inattendue, que pour avoir à la fois des copolymères homogènes et le bon compromis dont on vient de parler, il est obligatoire:

— dans le cas où l'on emploie au départ des diacides courts (a) ayant de 2 à 7 atomes de carbone et des diamines courtes (c) ayant de 2 à 7 atomes de carbone, de conduire la polycondensation des réactifs en deux étapes [prépolymérisation et réaction du prépolymère sur le réactif adéquat (e) ou 'e') ou (d') ou (c) ou (a)],

— et de faire appel à un réactif à ponts éthers (e) ou (e') particulier ayant les spécifications spéciales en matière de masse moléculaire indiquées ci-avant.

En définitive, les copolyétheramides obtenus présentent une bonne résistance thermo-mécanique due à leurs points de fusion élevés allant de 150°C à environ 280°C. Ils possèdent une Tg, mesurée à EHO, qui peut atteindre des valeurs inférieures à −50°C, ce qui leur confère une souplesse et une élasticité (pouvant être réglées en jouant sur les proportions de blocs éthers) qui peuvent être maintenues à des températures aussi basses que celles comprises entre −20°C et −40°C. Leur viscosité élevée à l'état fondu, mesurée dans les conditions définies ci-après, qui peut être ajustée aisément entre 100 poises et plus de 5000 poises, leur confère aussi une excellente aptitude au moulage par injection et par extrusion. Etant parfaitement homogènes, ils présentent de plus des propriétés de transparence améliorée. Diverses applications faisant appel aux qualités spécifiques de ces copolyétheramides peuvent être envisagées dans des domaines aussi variés que les industries mécaniques, le bâtiment, l'industrie automobile l'électroménager.

Les exemples qui suivent illustrent de manière non limitative comment la présente invention peut être mise en pratique.

Dans ces exemples un certain nombre de contrôles sont effectués. De mème, diverses propriétés sont mesurées. On indique ci-après les modes opératoires et/ou les normes selon lesquelles ces contrôles et mesures sont effectués.

— Analyse microcalorimétrique

On caractérisé les polymères par les caractéristiques de fusion telles que les endothermes de fusion EF et les exothermes de cristallisation Ec.

Ces déterminations sont effectuées sur un échantillon soumis à des variations de température tant en montée qu'en descente de 10°C.min. On détermine ainsi une courbe par microcalorimétrie différentielle sur laquelle on peut repérer les points de fuson (Tf) et de cristallisation au refroidissement (Tc). La différence entre Tf et Tc constitue la surfusion Δ caractérisant la nucléation.

— Transition vitreuse:

La température de transition vitreuse (Tg) correspond à la chute brutale du module de cisaillement en fonction de la température. Elle peut être déterminée sur le graphique représentant les variations du module de torsion en fonction de la température, variations mesurées par analyse thermomécanique au pendule de torsion automatique.

— Module de cisaillement en torsion:

Il est déterminé à deux températures: à −20°C et à +20°C au pendule automatique de torsion sous une fréquence de l'ordre de 1 Hertz selon la norme ISO R 537. Les éprouvettes sont conditionnées à EHO, c'est-à-dire qu'elles sont placées en dessicateur sur silicagel et séchées 24 heures à température ambiante sous 0,66—1,33 · $10^2$ Pa avant de réaliser les mesures. Les résultats sont exprimés en MPa.

— Viscosité à l'état fondu:

Elle est mesurée à 260°C sous un gradient de cisaillement de 10 $s^{-1}$ à l'aide d'un rhéomètre DAVENPORT. Les résultats sont exprimés en poises. Pour les copolyétheramides ayant un point de fusion supérieur à 255°C, elle est mesurée à une température supérieure de 10°C au point de fusion.

— Détermination des groupements terminaux sur copolyamide:

La méthode décrite ci-après permet de doser les deux types de groupements terminaux sur une seul prise d'essai et avec un seul titrage acidimétrique. Le copolyamide est mis en solution à température ambiante sous agitation dans un mélange trifluoroéthanol/chloroforme. Après dissolution on ajoute une solution hydroalcoolique d'hydroxyde de tétrabutylammonium 0,05 N et l'on réalise un titrage potentiométrique par un solution titrée d'acide chlorhydrique 0,05 N sous balayage d'azote. L'exploitation de la courbe potentiomètrique présentant deux sauts de potentiel permet la détermination des deux types de groupements terminaux. Le résultat est donnée en milliéquivalents gramme par kilogramme de polymère (meq/kg).

Dans les exemples qui suivent, s'agissant de l'acide dimère mis en oeuvre, on fait appel à un composé mis dans le commerce par la Société UNICHEMA CHEMIE sous la marque déposée PRIPOL 1 010 dans lequel la fraction en acide difonctionnel est supérieurd à 95% en poids. Cette fraction en acide difonctionnel consiste en un mélange d'isomères ayant 36 atomes de carbone dont l'espèce prépondérante est un composé saturé de formule:

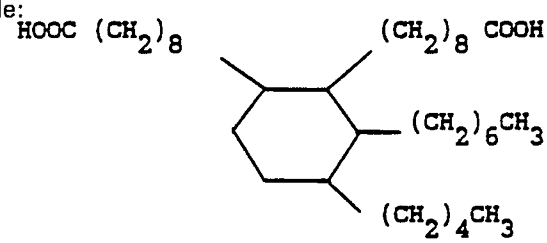

la fraction en acide monofonctionnel (dont le taux pondéral sera précisé ultérieurement) est constituée essentiellement par de l'acide oléique; quant à la fraction en acide de fonctionnalité supérieure à 2 (dont le taux pondéral sera précisé également ultérieurement), elle est constituée essentiellement par un mélange de trimères isomères ayant 54 atomes de carbone; la masse moléculaire moyenne en nombre de cet acide dimère est de l'ordre de 571.

S'agissant de la diamine dimère mise en oeuvre, on fait appel à un composé mis dans le commerce par la Société GENERAL MILLS sous la marque déposée VERSAMINE 52. Ce composé a sensiblement la même structure que celle du PRIPOL 1 010 dans lequel les groupes COOH sont remplacés par des groupes $CN_2NH_2$; la masse moléculaire moyenne en nombre de cette diamine dimère est de l'ordre de 541 g.

A propos de la méthode de détermination pour les réactifs (e) ou (e') de la fraction pondérale de chaînes possédant une masse moléculaire supérieure aux valeurs données ci-avant, on indiquera que cette détermination est établie de manière connue en soi à partir de la courbe intégrale présentée par la formule:

$$\sum_{i=1}^{i=i} ni\ Mi=f(Mi)$$

dans laquelle ni est le nombre de molécules de masse moléculaire Mi, et tracée par analyse chromatographique par perméation de gel, l'étalonnage en masses moléculaires étant réalisé en prenant pour masse moléculaire en moyenne en nombre la valeur trouvée par dosage des groupements terminaux (e) ou (e').

Exemple 1:

Copolyétheramide hexaméthylènediamine—acide adipique/acide dimère—polyoxypropylènediamine ayant une masse moléculaire moyenne en nombre de 455 et n'ayant pas de chaînes possédant une masse moléculaire supérieure à 1000, de composition pondérale voisine de 50/50 (blocs amides/blocs éthers).

On opère dans un réacteur en verre muni:

— d'un système de chauffage par un bain métallique (alliage de LIPOWITZ),

— d'un agitateur,

— d'un système permettant la mise sous atmosphère d'azote et de travailler sous une pression inférieure à la pression atmosphérique,

— d'un circuit permettant de condenser et de recueillir les produits volatils.

1. Première étape:

Dans le réacteur, on introduit à température ambiante (23°C) les charges suivantes;

— sel à l'état sec d'acide adipique et d'hexaméthylènediamine: 34,77 g (0,1326 mole),

— dimère d'acide gras PRIPOL 1 010 ayant un taux de monomère de 0,03% en poids et un taux de trimère de 3% en poids: 17,3 g (0,0303 mole).

On purge le réacteur avec un courant d'azote puis en demeurant sous atmosphère d'azote on met en route l'agitation et on élève progressivement en 45 minutes la température du mélange réactionnel jusqu'à 270°C. On distille à la pression atmosphérique de l'eau pendant 30 minutes. On établit alors progressivement en 10 minutes une pression de $6,65 \cdot 10^2$ Pa et on maintient le mélange réactionnel à 270°C sous cette pression réduite pendant 10 autres minutes et on revient ensuite à la pression atmosphérique. On obtient alors une masse réactionnelle parfaitement transparente.

2. Seconde étape:

Dans le mélange réactionnel agité et maintenu à 270°C, on introduit les autres charges suivantes:

— antioxydant commercialisé sous la marque déposée IRGANOX 1 010 par la Société CIBA GEIGY: 0,3 g,

— acide hypophosphoreux en solution aqueuse à 50% en poids: 0,06 g (0,05% en poids par rapport au copolyétheramide final),

— puis on ajoute, par coulée régulière en 30 minutes, 13,8 g (0,0303 mole) d'une polyoxypropylènediamine ayant une masse moléculaire moyenne en nombre de 455 et n'ayant pas de chaînes possédant une masse moléculaire supérieure à 1000, commercialisée par la Société BASF sous la dénomination ETHERDIAMINE MG 420.

En fin de coulée, on établit de nouveau une pression réduite de $106,4 \cdot 10^2$ Pa et on continue à agiter le mélange réactionnel parfaitement transparent à 270°C pendant 15 minutes.

Après refroidissement, on obtient un polymère souple, parfaitement transparent et homogène. L'examen de ce produit en microscopie électronique à balayage confirme la présence d'une seule phase.

Le polymère obtenu présente les caractéristiques suivantes:

— point de fusion (Tf): 231°C,

— point de cristallisation au refroidissement (Tc): 189°C,

— température de transition vitreuse (Tg) à EHO: −17°C,

— viscosité à l'état fondu à 260°C: 1000 poises,

— taux de groupements terminaux:

. $NH_2$: 30 meg/kg

. COOH: 67 meq/kg

— module de cisaillement en torsion:

. −20°C: 700 MPa

. +20°C: 140 MPa

A titre d'un premier essai comparatif (essai A), on a reproduit l'exemple 1 avec les mêmes réactifs et catalyseur, mais en opérant cette fois la polycondensation en une seule étape.

A titre d'un second essai comparatif (essai B), on a reproduit l'exemple 1, mais en opérant cette fois avec une polyoxypropylènediamine ayant une masse moléculaire moyenne en nombre non conforme de 2065.

A titre d'un troisième essai comparatif (essai C), on a reproduit l'exemple 1, mais en opérant cette fois avec une polyoxyéthlènediamine ayant une masse moléculaire moyenne en nombre non conforme de 2355.

A titre d'un quatrième essai comparatif (essai D), on a reproduit l'exemple 1, mais en opérant cette fois avec une polyoxypropylènediamine ayant une masse moléculaire moyenne en nombre non conforme de 1445.

Dans ces divers essais, les quantités de réactifs et catalyseur mis en oeuvre sont un peu différentes de celles correspondant à l'exemple 1, mais elles sont dans tous les cas déterminées de manière à obtenir un copolyétheramide de composition pondérale blocs amides/blocs éthers voisine de 50/50.

Essai A:

Dans l'appareil décrit à l'exemple 1, on introduit à température ambiante les charges suivantes:

— sel à l'état sec d'acide adipique et d'hexaméthylènediamine: 27,81 g (0,106 mole),

— dimère d'acide gras PRIPOL 1 010: 13,84 g (0,0242 mole),

— antioxydant IRGANOX 1 010: 0,240 g,

— acide hypophosphoreux en solution aqueuse à 50% en poids: 0,04 g (0,05% en poids par rapport au polymère final),

— polyoxypropylènediamine ETHERDIAMINE MG 420: 11,04 g (0,0242 mole).

On purge le réacteur avec un courant d'azote, puis en demeurant sous atmosphère d'azote on met en route l'agitation et on élève la température du mélange réactionnel jusqu'à 270°C. On obtient une masse opaque hétérogène qui demeure ainsi après un chauffage à 270°C pendant 1 heure 15 minutes. On établit ensuite progressivement en 20 minutes une pression de $26,6 \cdot 10^2$ Pa et on maintient le mélange réactionnel à 270°C sous cette pression réduite pendant 20 autres minutes et on revient à la pression atmosphérique. Le mélange réactionnel demeure opaque et hétérogène.

Après refroidissement, le polymère obtenu est opaque, d'aspect cireux et n'a aucune propriété mécanique. L'examen par microscopie électronique confirme l'existence d'une importante hétérogénéité de structure.

Essai B:

1. Première étape:

Dans l'appareil décrit à l'exemple 1, on introduit à température ambiante les charges suivantes:

— sel à l'état sec d'acide adipique et d'hexaméthylènediamine: 30 g (0,1144 mole),

— dimère d'acide gras PRIPOL 1 010: 5,68 g (0,00995 mole).

On purge le réacteur avec un courant d'azote, puis en demeurant sous atmosphère d'azote on met en route l'agitation et on élève progressivement en 45 minutes la température du mélange réactionnel jusqu'à 270°C. Après 80 minutes d'agitation à 270°C, on établit progressivement en 10 minutes une pression de $6,65 \cdot 10^2$ Pa et on maintient le mélange réactionnel à 270°C sous cette pression réduite pendant 10 autres minutes et on revient ensuite à la pression atmosphérique.

2. Seconde étape:

Dans le mélange réactionnel agité et maintenu à 270°C, on introduit les autres charges suivantes:

— antioxydant IRGANOX 1 010: 0,26 g,

— acide hypophosphoreux en solution aqueuse à 50% en poids: 0,052 g (0,05% en poids par rapport au polymère final),

— puis on ajoute, par coulée régulière en 30 minutes, 20,56 g (0,00995 mole) d'une polyoxypropylènediamine ayant une masse moléculaire moyenne en nombre de 2065 commercialisée par la Société BASF sous la dénomination ETHERDIAMINE 2000.

En fin de coulée, la masse obtenue est hétérogène et très visqueuse. On établit une pression réduite de $39,9 \cdot 10^2$ Pa et on continue à agiter le mélange réactionnel à 270°C sous cette pression réduite pendant 15 minutes.

Après refroidissement, on obtient un polymère opaque, d'aspect cireux et n'ayant, aucune propriété mécanique.

Essai C:

On opère, selon un procédé en deux étapes, exactement comme il est indiqué dans l'essai B précédent, mais en partant des charges suivantes:

1. Première étape:

— sel à l'état sec d'acide adipique et d'hexaméthylènediamine: 30 g (0,1144 mole),

— dimère d'acide gras PRIPOL 1 010: 5,11 g (0,00895 mole),

2. Seconde étape:

— antioxydant IRGANOX 1 010: 0,26 g,

— acide hypophosphoreux en solution aqueuse à 50%: 0,052 g,

— polyoxyéthylènediamine ayant une masse moléculaire moyenne en nombre de 2355 commercialisée par la Société TEXACO sous la marque déposée JEFFAMINE ED 2 001: 21,09 g (0,00895 mole),

En fin de coulée de la polyoxyéthylènediamine, le mélange réactionnel est totalement hétérogène et

très visqueux. Après retour à la température ambiante, on obtient un polymère opaque, d'aspect cireux et n'ayant pas de bonnes propriétés mécaniques.

Essai D:

On opère, selon un procédé en deux étapes, comme il est indiqué dans l'essai B précédent, mais en partant des charges suivantes et en effectuant quelques variantes opératoires:

1. Première étape:

— sel à l'état sec d'acide adipique et d'hexaméthylènediamine: 23,18 g (0,0884 mole),

— dimère d'acide gras PRIPOL 1 010: 5,74 g (0,01005 mole).

La température de réaction est de 275°C et la durée d'agitation du mélange réactionnel à pression atmosphérique sous cette température est de 40 minutes.

2. Seconde étape:

— antioxydant IRGANOX 1 010: 0,2 g,

— acide hypophosphoreux en solution aqueuse à 50%: 0,04 g,

— polyoxypropylènediamine ayant une masse moléculaire moyenne en nombre de 1445: 14,52 g (0,01005 mole).

En fin de coulée le mélange réactionnel obtenu est totalement hétérogène et très visqueux et on le maintient encore pendant 45 minutes sous agitation à 275°C avant d'établir la pression réduite. Celle-ci est limitée à $133 \cdot 10^2$ Pa et le mélange réactionnel est agité à 275°C sous cette pression réduite pendant 15 autres minutes.

Après retour à la température ambiante, on obtient un polymère blanc opaque.

Préparation de la polyoxypropylènediamine ayant une masse moléculaire moyenne en nombre de 1445:

Elle est préparée à partir de la polyoxypropylènediamine ETHERDIAMINE MG 420 qui est allongée par réaction avec un défaut d'acide dimère. Dans un réacteur identique à celui décrit à l'exemple 1, on introduit: 25 g (0,04378 mole) de dimère d'acide gras PRIPOL 1 010 et 39,84 g (0,08756 mole) de polyoxypropylènediamine ETHERDIAMINE MG 420. Après avoir purgé le réacteur avec un courant d'azote, on élève progressivement en 30 minutes la température du mélange jusqu'à 200°C. Après 30 minutes supplémentaires d'agitation à 200°C, on établit une pression de $39,9 \cdot 10^2$ Pa en 10 minutes et on maintient le mélange réactionnel à 200°C sous cette pression réduite pendant une heure. Le composé obtenu, parfaitement limpide est la diamine allongée souhaitée.

Exemple 2:

Copolyétheramide hexaméthylènediamine—acide adipique/acide dimère—polyoxypropylènediamine utilisée dans l'exemple 1, de composition pondérale voisine de 20/80 (blocs amides/blocs éthers).

On opère exactement comme il est indiqué dans l'exemple 1 précédent, mais en partant des charges suivantes:

1. Première étape:

— sel à l'état sec d'acide adipique et d'hexaméthylènediamine: 10,43 g (0,0398 mole),

— dimère d'acide gras PRIPOL 1 010: 20,75 g (0,0363 mole).

2. Seconde étape:

— antioxydant IRGANOX 1 010: 0,2 g,

— acide hypophosphoreux en solution aqueuse à 50%: 0,04 g (0,05% en poids par rapport au copolyétheramide final,

— polyoxypropylènediamine ETHERDIAMINE MG 420: 16,55 g (0,0363 mole).

En fin de polycondensation, on obtient un polymère très souple, parfaitement transparent et homogène.

Exemple 3:

Copolyétheramide hexaméthylènediamine—acide adipique/acide dimère—polyoxypropylènediamine utilisée dans l'exemple 1, de composition pondérale voisine de 80/20 (blocs amides/blocs éthers).

On opère comme il est indiqué dans l'exemple 1 précédent, mais en partant des charges suivantes et en effectuant quelques variantes opératoires:

1. Première étape:

— sel à l'état sec d'acide adipique et d'hexaméthylènediamine: 41,73 g (0,1591 mole),

— dimère d'acide gras PRIPOL 1 010: 5,19 g (0,00909 mole).

Après la montée en température jusqu'à 270°C, la durée de l'agitation à pression atmosphèrique est augmentée de 30 minutes à 2 heures 30 minutes.

2. Seconde étape:

— antioxydant IRGANOX 1 010: 0,225 g;

— acide hypophosphoreux en solution aqueuse à 50%: 0,045 g (0,05% en poids par rapport au copolyétheramide final),

— polyoxypropylènediamine ETHERDIAMINE MG 420: 4,13 g (0,00909 mole).

En fin de polycondensation, on obtient un polymère assez rigide, parfaitement homogène. Il présente un point de fusion de 252°C et un point de cristallisation au refroidissement de 211°C.

Exemple 4:

Copolyétheramide hexaméthylènediamine—acide adipique/acide dimère—polyoxyéthylènediamine ayant une masse moléculaire moyenne en nombre de 884 et 8% en poids de chaîne possédant une masse moléculaire supérieure à 1000, de composition pondérale voisine de 50/50 (blocs amides/blocs éthers).

On opère comme il est indiqué dans l'exemple 1 précédent, mais en partant des réactifs chargés suivants et en effectuant quelques variantes opératoires:

1. Première étape:

— sel à l'état sec d'acide adipique et d'hexaméthylènediamine: 23,18 g (0,08837 mole),

— dimère d'acide gras PRIPOL 1 010: 8,047 g (0,01409 mole).

2. Seconde étape:

— antioxydant IRGANOX 1 010: 0,2 g,

— acide hypophosphoreux en solution aqueuse à 50%: 0,04 g (0,05% en poids par rapport au copolyétheramide final),

— polyoxyéthylènediamine commercialisé par la Société TEXACO sous la marque déposée JEFFAMINE ED 900: 12,46 g (0,01409 mole).

En fin de coulée de la diamine à ponts éthers, on maintient le mélange réactionnel sous agitation pendant 15 minutes à 270°C avant d'établir la pression réduite. Celle-ci est limitée à $66,5 \cdot 10^2$ Pa et le mélange réactionnel est agité à 270°C sous cette pression réduite pendant 15 autres minutes.

On obtient un polymère souple, parfaitement transparent et homogène. Il présente un point de fusion de 236°C et un point de cristallisation au refroidissement de 199°C.

Exemple 5:

Copolyétheramide hexaméthylènediamine—acide adipique/acide dimère—polyoxytétraméthylènediamine ayant une masse moléculaire moyenne en nombre de 432 et 5% en poids de chaînes possédant une masse moléculaire supérieure à 1000, de composition pondérale voisine de 50/50 (blocs amides/blocs éthers).

On opére comme il est indiqué dans l'exemple 1 précédent, mais en partant des réactifs charges suivants et en effectuant quelques variantes opératoires:

1. Première étape:

— sel à l'état sec d'acide adipique et d'hexaméthylènediamine: 23,18 g (0,08837 mole),

— dimère d'acide gras PRIPOL 1 010: 10,44 g (0,01828 mole).

Après la montée en température jusqu'à 270°C, la durée de l'agitation à pression atmosphérique est augmentée de 30 minutes à 80 minutes.

2. Seconde étape:

— antioxydant IRGANOX 1 010: 0,2 g,

— acide hypophosphoreux en solution aqueuse à 50%: 0,04 g (0,05% en poids par rapport au copolyétheramide final),

— polyoxytétraméthylènediamine commercialisé par la Société BASF sous la dénomination BIS(3-AMINOPROPYL)POLYTETRAHYDROFURANNE 750 sur laquelle a été réalisé un fractionnement par distillation moléculaire de manière à isoler un composé ayant 5% en poids de chaînes possédant une masse moléculaire supérieure à 1000: 7,90 g (0,01828 mole).

En fin de coulée de la diamine à ponts éthers, on établit une pression de $39,9 \cdot 10^2$ Pa et on continue à agiter le mélange réactionnel à 270°C sous cette pression réduite pendant 15 minutes.

On obtient un polymère sous et homogène présentant un point de fusion de 228°C et un point de cristallisation au refroidissement de 201°C.

A titre d'essai comparatif (essai E), on a reproduit l'exemple 5, mais en opérant cette fois avec la polyoxytétraméthylènediamine BIS(3-AMINOPROPYL)-POLYTETRAHYDROFURANNE 750 de BASF sans lui faire subir un fractionnement; cette polyoxytétraméthylènediamine brute possède une masse moléculaire moyenne en nombre de 825, mais sa teneur en chaînes possédant une masse moléculaire supérieure à 1000 est de 30% en poids.

Essai E:

On opére exactement comme il est indiqué dans l'exemple 5, mais en partant des charges suivantes:

1. Première étape:
— sel à l'état sec d'acide adipique et d'hexaméthylènediamine: 26,08 g (0,09942 mole),
— dimère d'acide gras PRIPOL 1 010: 9,46 g (0,01656 mole).

2. Seconde étape:
— antioxydant IRGANOX 1 010: 0,2 g,
— acide hypophosphoreux en solution aqueuse à 50%: 0,04 g,
— polyoxytétraméthylènediamine BIS(3-AMINOPROPYL)-POLYTETRAHYDROFURANNE 750: 13,63 g (0,01652 mole).

On obtient un polymère souple. L'examen en microscopie électronique à balayage fait apparaître au niveau de la morphologie des hétérogénéités sous forme de particules dont les dimensions sont supérieures à 5 µm, certaines particules dépassant 10 µm.

Exemples 6:

Copolyétheramide hexaméthylènediamine—acide adipique/acide dimère—polyoxypropylènediamine de masse moléculaire moyenne en nombre 455 utilisée dans l'exemple 1/acide dimère—polyoxypropylènediamine de masse moléculaire moyenne en nombre 2065 utilisée dans l'essai B, de composition pondérale voisine de 50/47/3 (blocs amides/blocs éthers du premier type/blocs éthers du second type).

1. Première étape:
Dans l'appareil décrit à l'exemple 1, on introduit à température ambiante les charges suivantes:
— sel à l'état sec d'acide adipique et d'hexaméthylènediamine: 23,18 g (0,08837 mole),
— dimère d'acide gras PRIPOL 1 010: 11,1 g (0,01944 mole).

On purge le réacteur avec un courant d'azote, puis en demeurant sous atmosphère d'azote on met en route l'agitation et on élève progressivement en 45 minutes la température du mélangé réactionnel jusqu'à 275°C. Après 40 minutes d'agitation à 275°C, on établit progressivement en 10 minutes une pression de $6,65 \cdot 10^2$ Pa et on maintient le mélange réactionnel à 275°C sous cette pression réduite pendant 10 autres minutes et on revient ensuite à la pression atmosphérique.

2. Seconde étape:
Dans le mélange réactionnel maintenu à 275°C, on introduit les autres charges suivantes:
— antioxydant IRGANOX 1 010: 0,2 g,
— acide hypophosphoreux en solution aqueuse à 50%: 0,04 g (0,05% en poids par rapport au copolyétheramide final,
— puis on ajoute, par coulée régulière, un mélange constitué de 8,63 g (0,01897 mole) de polyoxypropylènediamine ETHERDIAMINE MG 420 et de 0,959 g (0,000464 mole) de polypropylènediamine ETHERDIAMINE 2000.

En fin de coulée, on maintient le mélange réactionnel de 275°C pendant 10 minutes, puis on établit une pression réduite de $6,65 \cdot 10^2$ Pa et on continue à agiter à 275°C sous cette pression réduite pendant encore 15 minutes. La masse réactionnelle est parfaitement transparente.

Après refroidissement, on obtient un polymère souple, translucide et parfaitement homogène. On ne trouve qu'une seule phase par examen en microscopie électronique à balayage.

Le polymère obtenu présente les caractéristiques suivantes:
— Tf: 229,5°C
— Tc: 189°C
— viscosité à l'état fondu à 260°C: 1500 poises
— taux de groupements terminaux:
. $NH_2$: 25,25 meq/kg
. COOH: 16,64 meq/kg
— module de cisaillement en torsion:
. −20°C: 700 MPa
. +20°C: 160 MPa

A titre d'essai comparatif (essai F), on a reproduit l'exemple 6 précédent, mais en utilisant cette fois une quantité de polyoxypropylènediamine ETHERDIAMINE 2000 qui représente 30% en poids par rapport au mélange des deux polyoxypropylènediamines (cette quantité est de 10% en poids dans l'exemple 6).

Essai F:

On opère exactement comme il est indiqué dans l'exemple 6 mais en partant des charges suivantes:

1. Première étape:
— sel à l'état sec d'acide adipique et d'hexaméthylènediamine: 23,18 g (0,08837 mole),
— dimère d'acide gras PRIPOL 1 010: 10,108 g (0,0177 mole).

2. Seconde étape:

— antioxydant IRGANOX 1 010: 0,2 g,

— acide hypophosphoreux en solution aqueuse à 50%: 0,04 g,

— polyoxypropylènediamine ETHERDIAMINE MG 420: 7,35 g (0,01615 mole),

— polyoxypropylènediamine ETHERDIAMINE 2000: 3,17 g (0,001535 mole).

On obtient un polymère souple mais opaque avec deux phases révélées par microscopie électronique.

Exemple 7:

Copolyétheramide acide adipique—hexaméthylènediamine/acide polyoxypropylènedicarboxylique ayant une masse moléculaire moyenne en nombre 528 et 3% en poids de chaînes possèdant une masse moléculaire supérieure à 1000—diamine dimère, de composition pondérale voisine de 70/30 (blocs amides/blocs éthers).

1. Première étape:

Dans l'appareil décrit à l'exemple 1, on introduit à température ambiante les charges suivantes:

— sel à l'état sec d'acide adipique et d'hexaméthylènediamine: 34,78 g (0,1326 mole),

— acide polyoxypropylènedicarboxylique précité commercialisé par la société BASF sous la dénomination PLURIOL E 600: 6,23 g (0,0118 mole).

On purge le réacteur avec un courant d'azote, puis en demeurant sous atmosphère d'azote on met en route l'agitation et on élève progressivement en 50 minutes la température du mélange réactionnel jusqu'à 270°C. Après 20 minutes d'agitation à 270°C, on établit progressivement en 10 minutes une pression de $6,65 \cdot 10^2$ Pa et on maintient le mélange réactionnel à 270°C sous cette pression réduite pendant 10 autres minutes et on revient ensuite à la pression atmosphérique. La masse réactionnelle est parfaitement transparente.

2. Seconde étape:

Dans le mélange réactionnel maintenu à 270°C, on introduit les autres charges suivantes:

— antioxydant IRGANOX 1 010: 0,2 g

— acide hypophosphoreux en solution aqueuse à 50%: 0,04 g,

— puis on ajoute, par coulée régulière, 6,4 g (0,0118 mole) de diamine dimère commercialisée par la Société GENERAL MILLS sous la marque déposée VERSAMINE 52.

En fin de coulée, on maintient le mélange réactionnel à 270°C pendant 20 minutes, puis on établit une pression réduite de $6,65 \cdot 10^2$ Pa et on continue à agiter à 270°C sous cette pression réduite pendant encore 10 minutes.

Après refroidissement, on obtient un polymère parfaitement transparent et homogène ayant une point de fusion de 242,5°C et un point de cristallisation au refroidissement de 199°C.

A titre d'essai comparatif (essai G), on a reproduit l'exemple 7 avec les mêmes charges, mais en opérant cette fois la polycondensation en une seule étape.

Essai G:

On purge le réacteur avec un courant d'azote puis en demeurant sous atmosphère d'azote on met en route l'agitation et on élève progressivement en 1 heure 15 minutes la température du mélange réactionnel jusqu'à 270°C. Le mélange réactionnel est hétérogène. On maintient encore la température de 270°C pendant 1 heure et on établit en 10 minutes une pression de $13,3 \cdot 10^2$ Pa. Le mélange est encore agité à 270°C sous cette pression réduite pendant 15 minutes et on revient ensuite à la pression atmosphérique.

Après refroidissement, le polymère obtenu est opaque et hétérogène et il ne possède pas de propriétés mécaniques.

**Revendications pour les Etats Contractants: BE, CH, DE, GB, IT, LI, LU, NL, SE**

1. Copolyétheramidés à structure bloc, préparés à partir de diacides carboxyliques à chaîne courte, de diamines à chaîne courte, de diacides polymères ou de leurs dérivés aminés et de polyoxyalkylènediamines ou d'acides polyoxyalkylènedicarboxyliques, présentant notamment un point de fusion ou de ramollissement au moins égal à 150°C, une température de transition vitreuse mesurée à EHO au plus égale à −5°C et une viscosité à l'état fondu au moins égale à 100 poises, lesdits copolyétheramides étant caractérisés en ce qu'ils sont homogènes et qu'ils sont susceptibles d'être obtenus conformément au mode opératoire défini par les points suivants:

. dans une première étape, on prépare un prépolymère par chauffage des réactifs consistant:

— soit dans un mélange des espèces ci-après désignées:

(a)—au moins un diacide carboxylique aliphatique saturé à chaîne courte ayant de 2 à 7 atomes de carbone,

(b)—éventuellement au moins un diacide carboxylique à chaîne courte de nature cycloaliphatique saturée ou aromatique ayant au plus 16 atomes de carbone,

(c)—au moins une diamine primaire aliphatique saturée à chaîne courte ayant de 2 à 7 atomes de carbone, et

(d)—au moins un diacide polymère consistant dans un acide dimère obtenu par fractionnement d'une composition hydrogénée issue de la polymérisation catalytique d'acide(s) gras monomère(s) ayant 18 atomes de carbone ou (d') au moins un dérivé aminé de diacide polymère ou (e') au moins un acide polyoxyalkylènedicarboxylique,

les proportions des réactifs (a), éventuellement (b) et (c) étant choisies de manière à apporter des nombres de groupes $NH_2$ et COOH équivalents,

— soit dans le mélange d'au moins un sel dérivé des réactifs (a)+éventuellement (b)+(c) avec le réactif (d) ou (d') ou (e');

. puis dans une seconde étape, on fait réagir le prépolymère maintenu à une température au moins égale à la température de polymérisation:

— soit, dans le cas où le prépolymère est préparé à partir de diacide(s) polymère(s) (d), avec (e) au moins une polyoxyalkylènediamine,

— soit, dans le cas où le prépolymère est préparé à partir de dérivé(s) aminé(s) de diacide(s) polymère(s) (d'), avec (e') au moins un acide polyoxyalkylènedicarboxylique,

— soit, dans le cas où le prépolymère est préparé à partir d'acide(s) polyoxyalkylènedicarboxylique(s) (e'), avec (d') au moins un dérivé aminé de diacide polymère,

— cette réaction étant conduite, pendant une durée suffisante pour obtenir le copolymère de propriétés souhaitées, en présence d'un catalyseur (f) consistant soit en un composé (alpha), soit en un composé (béta), (alpha) désignant un oxyacide minéral ou un oxyacide organique autre qu'un acide carboxylique, dont l'une au moins des fonctions acides, quand il y en a plusieurs, possède une constante d'ionisation pka dans l'eau à 25°C égale ou inférieure à 4, (béta) désignant un sel alcalin ou alcalino-terreux de cet acide,

— le réactif à ponts éthers (e) ou (e') consistant:

(i)—soit dans une ou plusieurs polyoxyalkylènediamine(s) ou dans un ou plusieurs acide(s) polyoxyalkylènedicarboxylique(s) ayant chacun d'une part une masse moléculaire moyenne en nombre qui se situe dans l'intervalle allant de 400 à 1000 et d'autre part au plus 10% en poids de chaînes possédant une masse moléculaire supérieure à 10000,

(ii)—soit dans un mélange d'une ou plusieurs polyoxyalkylènediamine(s) ou d'un ou plusieurs acide(s) polyoxyalkylènedicarboxylique(s) tels que définis sous (i) avec au plus 10% en poids par rapport au mélange, respectivement, d'une ou plusieurs polyoxyalkylènediamine(s) de même nature ou d'un ou plusieurs acide(s) polyoxyalkylènedicarboxylique(s) de même nature ayant chacun une masse moléculaire moyenne en nombre supérieure à 1200 et au plus égale à 1000,

(iii)—lesdits polyoxyalkylènediamine(s) et acide(s) polyoxyalkylènedicarboxylique(s) étant choisis dans le groupe formé par:

+ les polyoxyéthylènediamines, polyoxypropylènediamines, polyoxytétraméthylènediamines et les acides polyoxyéthylènedicarboxyliques, polyoxypropylènedicarboxyliques, polyoxytétraméthylènedicarboxyliques représentés par la formule:

$$X—R_1—(OR_2)_n—OR_3—X— \qquad (I)$$

dans laquelle:

. les symboles X représentent un groupe $NH_2$ ou un groupe COOH,

. les symboles $R_1$, $R_2$ et $R_3$ répondent aux définitions suivantes: pour les espèces polyoxyéthylène

$$R_1{=}R_3{=}—\underset{}{\overset{CH_3}{\overset{|}{CH}}}—CH_2—$$

et

$$R_2{=}—CH_2—CH_2—;$$

pour les espèces polyoxypropylène

$$R_1{=}R_2{=}R_3{=}—\overset{CH_3}{\overset{|}{CH}}—CH_2—;$$

pour les espèces polyoxytétraméthylène

$$R_1{=}R_3{=}—\overset{CH_3}{\overset{|}{CH}}—CH_2—$$

et

$$R_2{=}—CH_2—CH_2—CH_2—CH_2—,$$

. le symbole n est un nombre déterminé de manière à procurer des composés à ponts éthers ayant les spécifications en matière de masse moléculaire indiquées ci-avant dans les points (i) et (ii), et

+ les composés obtenus par réaction d'une polyoxyalkylènediamine de formule (I) avec un défaut d'un diacide polymère (d) ou d'un acide polyoxyalkylènedicarboxylique de formule (I), ainsi encore que les composés obtenus par réaction d'un acide polyoxyalkylènedicarboxylique de formule (I) avec un défaut de dérivé aminé (d') d'un diacide polymère ou d'une polyoxyalkylènediamine de formule (I), lesdits composés de réaction obtenus ayant les spécifications en matière de masse moléculaire indiquées ci-avant dans les points (i) et (ii),

— les proportions du réactif adéquat (e) ou (e') ou (d') étant choisies en relation avec les proportions des réactifs mis en oeuvre dans la première étape de manière à ce que les nombres de groupes $NH_2$ et COOH présents dans le mélange réactionnel de la seconde étape soient équivalents.

2. Copolyétheramides à structure bloc, préparés à partir de diacides carboxyliques à chaîne courte, de diamines à chaîne courte, de diacides polymères ou de leurs dérivés aminés et de polyoxyalkylènediamines ou d'acides polyoxyalkylènedicarboxyliques, présentant notamment un point de fusion ou de ramollissement au moins égal à 150°C une température de transition vitreuse mesurée à EHO au plus égale à −5°C et une viscosité à l'état fondu au moins égale à 100 poises, lesdits copolyétheramides étant caractérisés en ce qu'ils sont homogènes et qu'ils sont susceptibles d'être obtenus conformément au mode opératoire défini par les points suivants:

. dans une première étape, on prépare un prépolymère par chauffage des réactifs consistant dans les mélanges suivants:

— ($m_1$) soit:

(a) au moins un diacide carboxylique aliphatique saturé à chaîne courte ayant de 2 à 7 atomes de carbone,

(b) éventuellement au moins un diacide carboxylique à chaîne courte de nature cycloaliphatique saturée ou aromatique ayant un plus 16 atomes de carbone,

(d) au moins un diacide polymère consistant dans un acide dimère obtenu par fractionnement d'une composition hydrogénée issue de la polymérisation catalytique d'acide(s) gras monomère(s) ayant 18 atomes de carbone, et

(e) au moins une polyoxyalkylènediamine,

— ($m_2$) soit:

le réactif (a) précité, éventuellement le réactif (b) précité, (d') au moins un dérivé aminé de diacide polymère, et

(e') au moins un acide polyoxyalkylènedicarboxylique,

— ($m_3$) soit:

éventuellement le réactif (b) précité, (c) au moins une diamine primaire aliphatique saturée à chaîne courte ayant de 2 à 7 atomes de carbone, le réactif (d) précité, et

le réactif (e) précité,

— ($m_4$) soit:

éventuellement le réactif (b) précité,

le réactif (c) précité,

le réactif (d') précité, et

le réactif (e') précité,

— les propositions des réactifs (d), (e) et éventuellement (b) ou (d'), (e') et éventuellement (b) étant choisies de manière à apporter des nombres de groupes $NH_2$ et COOH équivalents;

. puis dans une seconde étape on fait réagir le prépolymère maintenu à une température au moins égale à la température de prépolymérisation:

— soit, dans le cas où le prépolymère est préparé à partir des mélanges ($m_1$) ou ($m_2$), avec le réactif (c) précité,

— soit, dans le cas où le prépolymère est préparé à partir des mélanges ($m_3$) ou ($m_4$), avec le réactif (a) précité,

— cette réaction étant conduite, pendant une durée suffisante pour obtenir le copolymère de propriétés souhaitées, en présence d'un catalyseur (f) consistant soit en un composé (alpha), soit en un composé (béta), (alpha) désignant un oxyacide minéral ou un oxyiacide organique autre qu'un acide carboxylique, dont l'une au moins des fonctions acides, quand il y en a plusieurs, possède une constante d'ionisation pka dans l'eau à 25°C égale ou inférieure à 4, (béta) désignant un sel alcalin ou alcalino-terreux de cet acide,

— le réactif à ponts éthers (e) ou (e') consistant:

(i)—soit dans une ou plusieurs polyoxyalkylènediamine(s) ou dans un ou plusieurs acide(s) polyoxyalkylènedicarboxylique(s) ayant chacun d'une part une masse moléculaire moyenne en nombre qui se situe dans l'intervalle allant de 400 à 1000 et d'autre part au plus 10% en poids de chaînes possèdant une masse moléculaire supérieur à 1000,

(ii)—soit dans un mélange d'une ou plusieurs polyoxyalkylènediamine(s) ou d'un ou plusieurs acide(s) polyoxyalkylènedicarboxylique(s) tels que définis sous (i) avec au plus 10% en poids par rapport au mélange, respectivement, d'une ou plusieurs polyoxyalkylènediamine(s) de même nature ou d'un ou plusieurs acide(s) polyoxyalkylènedicarboxylique(s) de même nature ayant chacun une masse moléculaire moyenne en nombre supérieure à 1200 et au plus égale à 10000,

(iii)—lesdits polyoxyalkylènediamine(s) et acide(s) polyoxyalkylènedicarboxylique(s) étant choisie dans le groupe formé par:

+ les polyoxyéthylènediamines, polyoxypropylènediamines, polyoxytétraméthylènediamines et les acides polyoxyéthylènedicarboxyliques, polyoxypropylènedicarboxyliques, polyoxytétraméthylènedicarboxyliques représentés par la formule:

$$X—R_1—(OR_2)_n—OR_3—X— \qquad (I)$$

dans laquelle:

. les symboles X représentent un groupe $NH_2$ ou un groupe COOH,

. les symboles $R_1$, $R_2$ et $R_3$ répondent aux définitions suivantes: pour les espèces polyoxyéthylène

$$R_1=R_3=—\overset{\overset{\displaystyle CH_3}{|}}{C}H—CH_2—$$

et

$$R_2=—CH_2—CH_2—;$$

pour les espèces polyoxypropylène

$$R_1=R_2=R_3=—\overset{\overset{\displaystyle CH_3}{|}}{C}H—CH_2—;$$

pour les espèces polyoxytétraméthylène

$$R_1=R_3=—\overset{\overset{\displaystyle CH_3}{|}}{C}H—CH_2—$$

et

$$R_2=—CH_2—CH_2—CH_2—CH_2—,$$

. les symbole n est un nombre déterminé de manière à procurer des composés à ponts éthers ayant les spécifications en matière de masse moléculaire indiquées ci-avant dans les points (i) et (ii), et

+ les composés obtenus par réaction d'une polyoxyalkylènediamine de formule (I) avec un défaut d'un diacide polymère (d) ou d'un acide polyoxyalkylènedicarboxylique de formule (I), ainsi encore que les composés obtenus par réaction d'un acide polyoxyalkylènedicarboxylique de formule (I) avec un défaut de dérivé aminé (d') d'un diacide polymère ou d'une polyoxyalkylènediamine de formule (I), lesdits composés de réaction obtenus ayant les spécifications en matière de masse moléculaire indiquées ci-avant dans les points (i) et (ii),

— les proportions du réactif adéquat (c) ou (a) étant choisies en relation avec les proportions des réactifs mis en oeuvre dans la première étape de manière à ce que les nombres de groupes $NH_2$ et COOH présents dans le mélange réactionnel de la seconde étape soient équivalents.

3. Copolyétheramides selon l'une quelconque des revendications 1 et 2, caractérisés en ce que les diacides polymères (d) employés à l'état libre ou sous forme de dérivés aminés (d') sont des acides dimères comprenant une fraction en acide difonctionnel qui est supérieur à 94% en poids, une fraction en acide monofonctionnel qui est inférieure à 1% en poids et une fraction en acide de fonctionnalité supérieure à 2 qui est inférieure à 5% en poids.

4. Copolyétheramides selon l'une quelconque des revendications 1 à 3, caractérisés en ce que l'oxyacide (alpha) utilisé comme catalyseur (f) est:

— un oxyacide minéral choisi parmi les acides sulfureux, sulfurique, hypophosphoreux, phosphoreux, orthophosphorique ou pyrophosphorique,

— ou un oxyacide organique choisi parmi:

. les acides organosulfoniques de formule:

$$R_4—SO_3H \qquad (III)$$

dans laquelle $R_4$ représente: un radical alkyle linéaire ou ramifié ayant de 1 à 6 atomes de carbone; un radical phényle éventuellement substitué par 1 à 3 radicaux alkyles ayant de 1 à 3 atomes de carbone; un radical phénylalkyle comportant de 1 à 3 atomes de carbone dans le reste alkyle et dont le noyau benzènique peut éventuellement être substitué par 1 à 3 radicaux alkyles ayant de 1 à 3 atomes de carbone; ou un radical naphtyle éventuellement substitué par 1 à 4 radicaux alkyles ayant de 1 à 3 atomes de carbone;

. les acides organophosphoniques de formule:

$$R_5—P(O)(OH)_2 \qquad (III)$$

dans laquelle $R_5$ représente un radical alkyle, un radical phényle ou un radical phénylalkyle, chacun de ces radicaux ayant la définition donnée ci-avant pour $R_4$;

. les acides organophosphiniques de formule:

$$R_6R_7—P(O)(OH) \qquad (IV)$$

dans laquelle $R_6$ et $R_7$, identiques ou différents, représentent chacun: un radical alkyle linéaire ayant de 1 à 3 atomes de carbone; un radical phényle ou un radical phénylalkyle, chacun de ces deux derniers radicaux ayant la définition donnée ci-avant pour $R_4$;

. les acides organophosphoneux de formule:

$$R_8H—P(O)(OH) \qquad (V)$$

dans laquelle $R_8$ représente: un radical alkyle linéaire ou ramifié ayant de 1 à 4 atomes de carbone (la ramification étant exclue pour un radical alkyle à 4 atomes de carbone); un radical phényle ou un radical phénylalkyle, chacun de ces deux derniers radicaux ayant la définition donnée ci-avant pour $R_4$.

5. Copolyétheramides selon la revendication 4, caractérisés en ce que l'on utilise comme oxyacide (alpha) les acides dérivés du phosphore appartenant au groupe des acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

6. Copolyétheramides selon l'une quelconque des revendications 1 à 3, caractérisés en ce que le sel d'acide (béta) utilisé comme catalyseur (f) est choisi parmi les sels de sodium et de potassium issus des acides cités ci-avant dans la revendication 4 et, de préférence, issus des acides dérivés du phosphore cités ci-avant dans la revendication 5.

7. Copolyétheramides selon l'une quelconque des revendications 4 à 6, caractérisés en ce que les proportions d'oxyacide (alpha) ou de sel (béta), exprimées en pourcentage en poids par rapport au copolyétheramide final, sont comprises entre 0,01 et 1% et, de préférence, entre 0,01 et 0,5%.

8. Copolyétheramides selon l'une quelconque des revendications 1 à 7, caractérisés en ce qu'ils correspondent aux copolymères dérivant d'un prépolymère préparé à partir des réactifs (a)+éventuellement (b)+(c)+(d) ou (d') ou (e').

9. Copolyétheramides selon la revendication 8, caractérisés en ce que l'on part des réactifs (a)+(c)+(d) ou (d')+(e) ou (e').

10. Copolyétheramides selon l'une quelconque des revendications 1 à 9, caractérisés en ce que les proportions pondérales de blocs amides dans le polymères final sont comprises entre 15 et 85% et, de préférence, entre 40 et 60% et les proportions pondérales de blocs éthers sont comprises entre 85 et 15% et, de préférence, entre 60 et 40%.

**Revendications pour l'Etat Contractant: AT**

1. Procédé de préparation de copolyétheramides à structure bloc, préparés à partir de diacides carboxyliques à chaîne courte, de diamines à chaîne courte, de diacides polymères ou de leurs dérivés aminés et de polyoxyalkylènediamines ou d'acides polyoxyalkylènedicarboxyliques, ces copolyétheramides étant homogènes et présentant notamment un point de fusion ou de ramollissement au moins égal à 150°C, une température de transition vitreuse mesurée à EHO au plus égale à −5°C et une viscosité à l'état fondu au moins égale à 100 poises, ledit procédé étant caractérisé en ce que l'on met en oeuvre le mode opératoire défini par les points suivants:

. dans une première étape, on prépare un prépolymère par chauffage des réactifs consistant:

— soit dans un mélange des espèces ci-après désignées:

(a)—au moins un diacide carboxylique aliphatique saturé à chaîne courte ayant de 2 à 7 atomes de carbone,

(b)—éventuellement au moins un diacide carboxylique à chaîne courte de nature cycloaliphatique saturée ou aromatique ayant un plus 16 atomes de carbone,

(c)—au moins une diamine primaire aliphatique saturée à chaîne courte ayant de 2 à 7 atomes de carbone, et (d)—au moins un diacide polymère consistant dans un acide dimère obtenu par fractionnement d'une composition hydrogénée issue de la polymérisation catalytique d'acide(s) gras monomère(s) ayant 18 atomes de carbone ou (d') au moins un dérivé aminé de diacide polymère ou (e') au moins un acide polyoxyalkylènedicarboxylique,

les proportions des réactifs (a), éventuellement (b) et (c) étant choisies de manière à apporter des nombres de groupes $NH_2$ et COOH équivalents,

— soit dans le mélange d'au moins un sel dérivé des réactifs (a)+éventuellement (b)+(c) avec le réactif (d) ou (d') ou (e');

. puis dans une seconde étape, on fait réagir le prépolymère maintenu à une température au moins égale à la température de polymérisation:

— soit, dans le cas où le prépolymère est préparé à partir de diacide(s) polymère(s) (d), avec (e) au moins une polyoxyalkylènediamine,

— soit, dans le cas où le prépolymère est préparé à partir de dérivé(s) aminé(s) de diacide(s) polymère(s) (d'), avec (e') au moins un acide polyoxyalkylènedicarboxylique,

— soit, dans le cas où le prépolymère est préparé à partir d'acide(s) polyoxyalkylènedicarboxylique(s) (e'), avec (d') au moins un dérivé aminé de diacide polymère,

— cette réaction étant conduite, pendant une durée suffisante pour obtenir le copolymère de propriétés souhaitées, en présence d'un catalyseur (f) consistant soit en un composé (alpha), soit en un composé (béta), (alpha) désignant un oxyacide minéral ou un oxyacide organique autre qu'un acide carboxylique, dont l'une au moins des fonctions acides, quand il y en a plusieurs, possède une constante d'ionisation pka dans l'eau à 25°C égale ou inférieure à 4, (béta) désignant un sel alcalin ou alcalino-terreux de cet acide,

— le réactif à ponts éthers (e) ou (e') consistant:

(i)—soit dans une ou plusieurs polyoxyalkylènediamine(s) ou dans un ou plusieurs acide(s) polyoxyalkylènedicarboxylique(s) ayant chacun d'une part une masse moléculaire moyenne en nombre qui se situe dans l'intervalle allant de 400 à 1000 et d'autre part au plus 10% en poids de chaînes possédant une masse moléculaire supérieure à 1000,

(ii)—soit dans un mélange d'une ou plusieurs polyoxyalkylènediamine(s) ou d'un ou plusieurs acide(s) polyoxyalkylènedicarboxylique(s) tels que définis sous (i) avec au plus 10% en poids par rapport au mélange, respectivement, d'une ou plusieurs polyoxyalkylènediamine(s) de même nature ou d'un ou plusieurs acide(s) polyoxyalkylènedicarboxylique(s) de même nature ayant chacun un masse moléculaire moyenne en nombre supérieure à 1200 et au plus égale à 10000,

(iii)—lesdits polyoxyalkylènediamine(s) et acide(s) polyoxyalkylènedicarboxylique(s) étant choisie dans le groupe formé par:

+ les polyoxyéthylènediamines, polyoxypropylènediamines, polyoxytétraméthylènediamines et les acides polyoxyéthylènedicarboxyliques, polyoxypropylènedicarboxyliques, polyoxytétraméthylènedicarboxyliques représentés par la formule:

$$X—R_1—(OR_2)_n—OR_3—X— \qquad (I)$$

dans laquelle:

. les symboles X représentent un groupe $NH_2$ ou un groupe COOH,

. les symboles $R_1$, $R_2$ et $R_3$ répondent aux définitions suivantes: pour les espèces polyoxyéthylène

$$R_1=R_3=—\overset{\overset{CH_3}{|}}{C}H—CH_2—$$

et

$$R_2=—CH_2—CH_2—;$$

pour les espèces polyoxypropylène

$$R_1=R_2=R_3=—\overset{\overset{CH_3}{|}}{C}H—CH_2—;$$

pour les espèces polyoxytétraméthylène

$$R_1=R_3=—\overset{\overset{CH_3}{|}}{C}H—CH_2—$$

et

$$R_2=—CH_2—CH_2—CH_2—CH_2—,$$

. le symbole n est un nombre déterminé de manière à procurer des composés à ponts éthers ayant les spécifications en matière de masse moléculaires indiquées ci-avant dans les points (i) et (ii), et

+ les composés obtenus par réaction d'une polyoxyalkylènediamine de formule (I) avec un défaut d'un diacide polymère (d) ou d'un acide polyoxyalkylènedicarboxylique de formule (I), ainsi encore que les composés obtenus par réaction d'un acide polyoxyalkylènedicarboxylique de formule (I) avec un défaut de dérivé aminé (d') d'un diacide polymère ou d'une polyoxyalkylènediamine de formule (I), lesdits composés de réaction obtenus ayant les spécifications en matière de masse moléculaire indiquées ci-avant dans les points (i) et (ii),

— les proportions du réactif adéquat (e) ou (e') ou (d') étant choisies en relation avec les proportions des réactifs mis en oeuvre dans la première étape de manière à ce que les nombres de groupes $NH_2$ et COOH présents dans le mélange réactionnel de la seconde étape soient équivalents.

2. Procédé de préparation de copolyétheramides à structure bloc, préparés à partir de diacides carboxyliques à chaîne courte, de diamines à chaîne courte, de diacides polymères ou de leurs dérivés aminés et de polyoxyalkylènediamines ou d'acides polyoxyalkylènedicarboxyliques, ces copolyétheramides étant homogènes et présentant notamment un point de fusion ou de ramollissement au moins égal à 150°C, une température de transition vitreuse mesurée à EHO au plus égale à −5°C et une viscosité à l'état fondu au moins égale à 100 poises, lesdits copolyétheramides étant caractérisés en ce qu'ils sont homogènes et qu'ils sont susceptibles d'être obtenus conformément au mode opératoire défini par les points suivants:

. dans une première étape, on prépare un prépolymère par chauffage des réactifs consistant dans les mélanges suivants:

— ($m_1$) soit:

(a) au moins un diacide carboxylique aliphatique saturé à chaîne courte ayant de 2 à 7 atomes de carbone,

(b) éventuellement au moins un diacide carboxylique à chaîne courte de nature cycloaliphatique saturée ou aromatique ayant un plus 16 atomes de carbone,

(d) au moins un diacide polymère consistant dans un acide dimère obtenu par fractionnement d'une composition hydrogénée issue de la polymérisation catalytique d'acide(s) gras monomère(s) ayant 18 atomes de carbone, et

(e) au moins une polyoxyalkylènediamine,

— ($m_2$) soit:

le réactif (a) précité, éventuellement le réactif (b) précité, (d') au moins un dérivé aminé de diacide polymère, et

(e') au moins un acide polyoxyalkylènedicarboxylique,

— ($m_3$) soit:

éventuellement le réactif (b) précité, (c) au moins une diamine primaire aliphatique saturée à chaîne courte ayant de 2 à 7 atomes de carbone, le réactif (d) précité, et

le réactif (e) précité,

— ($m_4$) soit:

éventuellement le réactif (b) précité,

le réactif (c) précité,

le réactif (d') précité, et

le réactif (e') précité,

— les propositions des réactifs (d), (e) et éventuellement (b) ou (d'), (e') et éventuellement (b) étant choisies de manière à apporter des nombres de groupes $NH_2$ et COOH équivalents;

. puis dans une seconde étape on fait réagir le prépolymère maintenu à une température au moins égale à la température de prépolymérisation:

— soit, dans le cas où le prépolymère est préparé à partir des mélanges ($m_1$) ou ($m_2$), avec le réactif (c) précité,

— soit, dans le cas où le prépolymère est préparé à partir des mélanges ($m_3$) ou ($m_4$), avec le réactif (a) précité,

— cette réaction étant conduite, pendant une durée suffisante pour obtenir le copolymère de propriétés souhaitées, en présence d'un catalyseur (f) consistant soit en un composé (alpha), soit en un composé (béta), (alpha) désignant un oxyacide minéral ou un oxyiacide organique autre qu'un acide carboxylique, dont l'une au moins des fonctions acides, quand il y en a plusieurs, possède une constante d'ionisation pka dans l'eau à 25°C égale ou inférieure à 4, (béta) désignant un sel alcalin ou alcalino-terreux de cet acide,

— le réactif à ponts éthers (e) ou (e') consistant:

(i)—soit dans une ou plusieurs polyoxyalkylènediamine(s) ou dans un ou plusieurs acide(s) polyoxyalkylènedicarboxylique(s) ayant chacun d'une part une masse moléculaire moyenne en nombre qui se situe dans l'intervalle allant de 400 à 1000 et d'autre part au plus 10% en poids de chaînes possèdant une masse moléculaire supérieur à 1000,

(ii)—soit dans un mélange d'une ou plusieurs polyoxyalkylènediamine(s) ou d'un ou plusieurs acide(s) polyoxyalkylènedicarboxylique(s) tels que définis sous (i) avec au plus 10% en poids par rapport au mélange, respectivement, d'une ou plusieurs polyoxyalkylènediamine(s) de même nature ou d'un ou plusieurs acide(s) polyoxyalkylènedicarboxylique(s) de même nature ayant chacun une masse moléculaire moyenne en nombre supérieure à 1200 et au plus égale à 10000,

(iii)—lesdits polyoxyalkylènediamine(s) et acide(s) polyoxyalkylènedicarboxylique(s) étant choisie dans le groupe formé par:

+ les polyoxyéthylènediamines, polyoxypropylènediamines, polyoxytétraméthylènediamines et les acides polyoxyéthylènedicarboxyliques, polyoxypropylènedicarboxyliques, polyoxytétraméthylènedicarboxyliques représentés par la formule:

$$X—R_1—(OR_2)_n—OR_3—X— \qquad (I)$$

dans laquelle:

. les symboles X représentent un groupe $NH_2$ ou un groupe COOH,

. les symboles $R_1$, $R_2$ et $R_3$ répondent aux définitions suivantes: pour les espèces polyoxyéthylène

$$R_1=R_3=-\underset{}{\overset{CH_3}{\overset{|}{C}}}H-CH_2-$$

et

$$R_2=-CH_2-CH_2-;$$

pour les espèces polyoxypropylène

$$R_1=R_2=R_3=-\overset{CH_3}{\overset{|}{C}}H-CH_2-;$$

pour les espèces polyoxytétraméthylène

$$R_1=R_3=-\overset{CH_3}{\overset{|}{C}}H-CH_2-$$

et

$$R_2=-CH_2-CH_2-CH_2-CH_2-,$$

. le symbole n est un nombre déterminé de manière à procurer des composés à ponts éthers ayant les spécifications en matière de masse moléculaire indiquées ci-avant dans les points (i) et (ii), et

+ les composés obtenus par réaction d'une polyoxyalkylènediamine de formule (I) avec un défaut d'un diacide polymère (d) ou d'un acide polyoxyalkylènedicarboxylique de formule (I), ainsi encore que les composés obtenus par réaction d'un acide polyoxyalkylènedicarboxylique de formule (I) avec un défaut de dérivé aminé (d') d'un diacide polymère ou d'une polyoxyalkylènediamine de formule (I), lesdits composés de réaction obtenus ayant les spécifications en matière de masse moléculaire indiquées ci-avant dans les points (i) et (ii),

— les proportions du réactif adéquat (c) ou (a) étant choisies en relation avec les proportions des réactifs mis en oeuvre dans la première étape de manière à ce que les nombres de groupes $NH_2$ et COOH présents dans le mélange réactionnel de la seconde étape soient équivalents.

3. Procédé selon l'une quelconque des revendications 1 et 2, caractérisé en ce que les diacides polymères (d) employés à l'état libre ou sous forme de dérivés aminés (d') sont des acides dimères comprenant une fraction en acide difonctionnel qui est supérieure à 94% en poids, une fraction en acide monofonctionnel qui est inférieure à 1% en poids et une fraction en acide de fonctionnalité supérieure à 2 qui est inférieure à 5% en poids.

4. Procédé selon l'une quelconque des revendications 1 à 3, caractérisé en ce que l'oxyacide (alpha) utilisé comme catalyseur (f) est:

— un oxyacide minéral choisi parmi les acides sulfureux, sulfurique, hypophosphoreux, phosphoreux, orthophosphorique ou pyrophosphorique,

— ou un oxyacide organique choisi parmi:

. les acides organosulfoniques de formule:

$$R_4-SO_3H \qquad (III)$$

dans laquelles $R_4$ représente: un radical alkyle linéaire ou ramifié ayant de 1 à 6 atomes de carbone; un radical phényle éventuellement substitué par 1 à 3 radicaux alkyles ayant de 1 à 3 atomes de carbone; un radical phénylalkyle comportant de 1 à 3 atomes de carbone dans le reste alkyle et dont le noyau benzènique peut éventuellement être substitué par 1 à 3 radicaux alkyles ayant de 1 à 3 atomes de carbone; ou un radical naphtyle éventuellement substitué par 1 à 4 radicaux alkyles ayant de 1 à 3 atomes de carbone;

. les acides organophosphoniques de formule:

$$R_5-P(O)(OH)_2 \qquad (III)$$

dans laquelle $R_5$ représente un radical alkyle, un radical phényle ou un radical phénylalkyle, chacun de ces radicaux ayant la définition donnée ci-avant pour $R_4$;

. les acides organophosphiniques de formule:

$$R_6R_7-P(O)(OH) \qquad (IV)$$

dans laquelle $R_6$ et $R_7$, identiques ou différents, représentent chacun: un radical alkyle linéaire ayant de 1 à 3 atomes de carbone; un radical phényle ou un radical phénylalkyle, chacun de ces deux derniers radicaux ayant la définition donnée ci-avant pour $R_4$;

. les acides organophosphoneux de formule:

$$R_8H—P(O)(OH) \qquad (V)$$

dans laquelle $R_8$ représente: un radical alkyle linéaire ou ramifié ayant de 1 à 4 atomes de carbone (la ramification étant exclue pour un radical alkyle à 4 atomes de carbone); un radical phényle ou un radical phénylalkyle, chacun de ces deux derniers radicaux ayant la définition donnée ci-avant pour $R_4$.

5. Procédé selon la revendication 4, caractérisé en ce que l'on utilise comme oxyacide (alpha) les acides dérivés du phosphore appartenant au groupe des acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

6. Procédé selon l'une quelconque des revendications 1 à 3, caractérisé en ce que le sel d'acide (béta) utilisé comme catalyseur (f) est choisi parmi les sels de sodium et de potassium issus des acides cités ci-avant dans la revendication 4 et, de préférence, issus des acides dérivés du phosphore cités ci-avant dans la revendication 5.

7. Procédé selon l'une quelconque des revendications 4 à 6, caractérisées en ce que les proportions d'oxyacide (alpha) ou de sel (béta), exprimées en pourcentage en poids par rapport au copolyétheramide final, sont comprises entre 0,01 et 1% et, de préférence, entre 0,01 et 0,5%.

8. Procédé selon l'une quelconque des revendications 1 à 7, caractérisé en ce que les copolymères dérivent d'un prépolymère préparé à partir des réactifs (a)+éventuellement (b)+(c)+(d) ou (d') ou (e').

9. Procédé selon la revendication 8, caractérisé en ce que l'on part des réactifs (a)+(c)+(d) ou (d')+(e) ou (e').

10. Procédé selon l'une quelconque des revendications 1 à 9, caractérisé en ce que les proportions pondérales de blocs amides dans le polymères final sont comprises entre 15 et 85% et, de préférence, entre 40 et 60% et les proportions pondérales de blocs éthers sont comprises entre 85 et 15% et, de préférence, entre 60 et 40%.

**Patentansprüche für die Vertragsstaaten: BE, CH, DE, GB, IT, LI, LU, NL, SE**

1. Copolyetheramide mit Blockstruktur, hergestellt aus Dicarbonsäuren mit kurzer Kette, Diaminen mit kurzer Kette, polymeren Disäuren oder ihren Aminderivaten und Polyoxyalkylendiaminen oder Polyoxyalkylendicarbonsäuren, die insbesondere einen Schmelzpunkt oder Erweichungspunkt von mindestens 150°C haben, eine Glasübergangstemperatur, gemessen bei EHO, höchstens gleich −5°C und eine Schmelzviskosität mindestens gleich 100 Poise haben, wobei diese Copolyetheramide dadurch gekennzeichnet sind, daß sie homogen sind und daß sie in der Lage sind, in Übereinstimmung mit der durch die folgenden Punkte definierten Arbeitsweise erhalten zu werden:

in einer ersten Stufe stellt man ein Präpolymeres durch Erhitzen der Reaktanten her, bestehend aus:

— entweder einem Gemisch der im folgenden angegebenen Arten:

(a) mindestens eine gesättigte, aliphatische Dicarbonsäure mit kurzer Kette mit 2 bis 7 Kohlenstoffatomen,

(b) gegebenenfalls mindestens eine Dicarbonsäure mit kurzer Kette von gesättigter, cycloaliphatischer oder aromatischer Natur mit höchstens 16 Kohlenstoffatomen,

(c) mindestens ein gesättigtes, aliphatisches, primäres Diamin mit kurzer Kette mit 2 bis 7 Kohlenstoffatomen, und

(d) mindestens eine polymere Disäure, bestehend aus einer dimeren Säure, erhalten durch Fraktionierung einer hydrierten Zusammensetzung, stammend von der katalytischen Polymerisation von monomerer(n) Fettsäure(n) mit 18 Kohlenstoffatomen, oder (d') mindestens einem Aminderivat der polymeren Disäure oder (e') mindestens einer Polyoxyalkylendicarbonsäure,

wobei die Mengenverhältnisse der Reaktanten (a), gegebenenfalls (b) und (c), derart ausgewählt sind, daß die Zahlen der Gruppen $NH_2$ und COOH äquivalent eingebracht werden,

— oder einem Gemisch wenigstens eines Salzes, stammend von den Reaktanten (a)+gegebenenfalls (b)+(c) mit dem Reaktanten (d) oder (d') oder (e');

dann wird in einer zweiten Stufe das Präpolymere, welches bei einer Temperatur mindestens gleich der Polymerisationstemperatur gehalten wird, reagieren gelassen:

— entweder im Falle, daß das Präpolymere hergestellt wird aus polymerer(n) Disäure(n) (d), mit (e) wenigstens einem Polyoxyalkylendiamin,

— oder im Falle, daß das Präpolymere hergestellt wird ausgehend von Aminderivat(en) der polymeren Disäure(n) (d'), mit (e') wenigstens einer Polyoxyalkylendicarbonsäure,

— oder im Falle, daß das Präpolymere hergestellt wird ausgehend von Polyoxyalkylendicarbonsäure(n) (e'), mit (d') wenigstens einem Aminderivat der polymeren Disäure,

— wobei diese Reaktion während einer ausreichenden Zeitdauer durchgeführt wird, um das

Copolymere mit den gewünschten Eigenschaften zu erhalten, in Gegenwart eines Katalysators (f), der entweder aus einer Verbindung (alpha) oder einer Verbindung (beta) besteht, wobei (alpha) eine mineralische oder eine organische Sauerstoffsäure, anders als eine Carbonsäure, ist, wovon wenigstens eine der Säurefunktionen, wenn es mehrere gibt, eine Ionisationskonstante pka in Wasser bei 25°C gleich oder unter 4 hat, und (beta) ein Alkali- oder Erdalkalisalz dieser Säure bedeutet,

— wobei der Reaktant mit Etherbrücken (e) oder (e') besteht:

(i) entweder aus einem oder mehreren Polyoxyalkylendiamin(en) oder aus einer oder mehreren Polyoxyalkylendicarbonsäure(n), die jeweils einerseits eine zahlenmittlere Molekularmasse haben, welche in dem Bereich von 400 bis 1000 liegt, und andererseits höchstens 10 Gew.% Ketten mit einer Molekularmasse oberhalb 1000,

(ii) oder aus einem Gemisch eines oder mehrerer Polyoxyalkylendiamins(e) oder eine oder mehrerer Polyoxyalkylendicarbonsäure(n), wie sie unter (i) definiert sind, mit höchstens 10 Gew.% in bezug auf das Gemisch eines oder mehrerer Polyoxyalkylendiamins(e) der gleichen Natur oder einer oder mehrerer Polyoxyalkylendicarbonsäure(n) der gleichen Natur, wobei jedes eine zahlenmittlere Molekularmasse größer als 1200 und höchstens gleich 10 000 hat,

(iii) wobei das oder die Polyoxyalkylendiamin(e) d Polyoxyalkylendicarbonsäure(n) ausgewählt sind aus der Gruppe, gebildet aus:

+ den Polyoxyethylendiaminen, Polyoxypropylendiaminen, Polyoxytetramethylendiaminen und den Polyoxyethylendicarbonsäuren, Polyoxypropylendicarbonsäuren, Polyoxytetramethylendicarbonsäuren, dargestellt durch die Formel:

$$X—R_1—(OR_2)_n—OR_3—X— \qquad (I)$$

worin bedeuten:

. die Symbole X bedeuten eine $NH_2$-Gruppe oder eine COOH-Gruppe,

. die Symbole $R_1$, $R_2$ und $R_3$ entsprechen den folgenden Definitionen: für die Polyoxyethylenarten ist

$$R_1=R_3=—\overset{\overset{\displaystyle CH_3}{|}}{C}H—CH_2—$$

und

$$R_2=—CH_2—CH_2—;$$

für die Polyoxypropylenarten ist

$$R_1=R_2=R_3=—\overset{\overset{\displaystyle CH_3}{|}}{C}H—CH_2—;$$

für die Polyoxytetramethylenarten ist

$$R_1=R_3=—\overset{\overset{\displaystyle CH_3}{|}}{C}H—CH_2—$$

und

$$R_2=—CH_2—CH_2—CH_2—CH_2—,$$

. das Symbol n ist eine bestimmte Zahl, so daß Verbindungen mit Etherbrücken geschaffen werden, welche die Spezifizierungen in Molekularmasse haben, die vorstehend in den Punkten (i) und (ii) angegeben sind, und

+ die Verbindungen, erhalten durch Reaktion eines Polyoxyalkylendiamins der Formel (I) mit einem Mangel an polymerer Disäure (d) oder einer Polyoxyalkylendicarbonsäure der Formel (I), sowie die Verbindungen, erhalten durch Reaktion einer Polyoxyalkylendicarbonsäure der Formel (I) mit einem Mangel an Aminderivat (d') einer polymeren Disäure oder eines Polyoxyalkylendiamins der Formel (I), wobei die erhaltenen Reaktionsprodukte die Spezifizierungen hinsichtlich der Molekularmasse haben, wie sie oben in den Punkten (i) und (ii) angegeben sind,

— die Mengenverhältnisse des adäquaten Reaktanten (e) oder (e') oder (d') sind in Relation mit den Mengenverhältnissen der in der ersten Stufe eingesetzten Reaktanten derart gewählt, daß die Zahlen der $NH_2$-Gruppen und COOH-Gruppen, die in dem Reaktionsgemisch der zweiten Stufe vorhanden sind, äquivalent sind.

2. Copolyetheramide mit Blockstruktur, hergestellt aus Dicarbonsäuren mit kurzer Kette, Diaminen mit kurzer Kette, polymeren Disäuren oder deren Aminderivaten und Polyoxyalkylendiaminen oder Polyoxyalkylendicarbonsäuren, die insbesondere einen Schmelzpunkt oder Erweichungspunkt mindestens gleich 150°C, eine Glasübergangstemperatur, gemessen bei EHO, höchstens gleich −5°C und eine Schmelzviskosität mindestens gleich 100 Poise aufweisen, wobei diese Copolyetheramide dadurch gekennzeichnet sind, daß sie homogen und in der Lage sind, in Übereinstimmung mit der in den folgenden Punkten definierten Arbeitsweise erhalten zu werden:

. in einer ersten Stufe stellt man ein Präpolymeres durch Erhitzen der Reaktanten her, die aus den folgenden Mischungen bestehen:

— ($m_1$) entweder:

(a) mindestens eine gesättigte, aliphatische Dicarbonsäure mit kurzer Kette mit 2 bis 7 Kohlenstoffatomen,

(b) gegebenenfalls mindestens eine Dicarbonsäure mit kurzer Kette gesättigter, cyclialiphatischer oder aromatischer Natur mit höchstens 16 Kohlenstoffatomen,

(d) mindestens eine polymere Disäure, bestehend in einer dimeren Säure, erhalten durch Fraktionierung einer hydrierten Zusammensetzung, stammend von der katalytischen Polymerisation von monomerer(n) Fettsäure(n) mit 18 Kohlenstoffatomen, und

(e) mindestens ein Polyoxyalkylendiamin,

— ($m_2$) oder:

der vorerwähnte Reaktionsteilnehmer (a), gegebenenfalls der vorerwähnte Reaktionsteilnehmer (b),

(d') mindestens ein Aminderivat einer polymeren Disäure, und

(e') mindestens eine Polyoxyalkylendicarbonsäure,

— ($m_3$) oder:

gegebenenfalls die vorerwähnte Reaktionskomponente (b),

(c) mindestens ein gesättigtes, aliphatisches, primäres Diamin mit kurzer Kette mit 2 bis 7 Kohlenstoffatomen, die vorerwähnte Reaktionskomponente (d), und die vorerwähnte Reaktionskomponente (e),

— ($m_4$) oder:

gegebenenfalls die vorerwähnte Reaktionskomponente (b), die vorerwähnte Reaktionskomponente (c), die vorerwähnte Reaktionskomponente (d') und die vorerwähnte Reaktionskomponente (e'),

— wobei die Sätze der Reaktionsteilnehmer (d), (e) und gegebenenfalls (b) oder (d'), (e') und gegebenenfalls (b) derart gewählt sind, daß die Zahlen der Gruppen $NH_2$ und COOH äquivalent eingebracht werden:

. dann läßt man in einer zweiten Stufe das Präpolymere, das bei einer Temperatur gehalten wird, die mindestens gleich der Präpolymerisationstemperatur ist, reagieren mit

— entweder im Falle, daß das Präpolymere hergestellt ist aus Mischungen ($m_1$) oder ($m_2$), mit dem vorerwähnten Reaktionsteilnehmer (c),

oder im Falle, daß das Präpolymere hergestellt ist aus Mischungen ($m_3$) oder ($m_4$), mit dem vorerwähnten Reaktionsteilnehmer (a),

— wobei diese Reaktion während einer genügenden Zeitdauer durchgeführt wird, um das Copolymere mit den gewünschten Eigenschaften zu erhalten, in Gegenwart eines Katalysators (f), der entweder aus einer Verbindung (alpha) oder aus einer Verbindung (beta) besteht, wobei (alpha) eine mineralische oder organische Sauerstoffsäure, anders als eine Carbonsäure, bedeutet, wovon wenigstens eine der Säurefunktionen, wenn es mehrere gibt, eine Ionisationskonstante pka in Wasser bei 25°C gleich oder unter 4 besitzt, (beta) ein Alkali- oder Erdalkalisalz dieser Säure bedeutet,

— wobei der Reaktionsteilnehmer mit Etherbrücken (e) oder (e') besteht aus:

(i) entweder aus einem oder mehreren Polyoxyalkylendiamin(en) oder einer oder mehreren Polyoxyalkylendicarbonsäure(n), die jeweils einerseits eine zahlenmittlere Molekularmasse im Bereich von 400 bis 1000 haben und andererseits höchstens 10 Gew.% Ketten mit einer Molekularmasse oberhalb 1000 haben,

(ii) oder aus einem Gemisch von einem oder mehreren Polyoxyalkylendiamin(en) oder einer oder mehrerer Polyoxyalkylendicarbonsäure(n), wie sie unter (i) definiert sind, mit höchstens 10 Gew.%, in bezug auf das Gemisch, eines oder mehrerer Polyoxyalkylendiamin(e) der gleichen Natur oder einer oder mehrerer Polyoxyalkylendicarbonsäure(n) der gleichen Natur, wobei jede eine zahlenmittlere Molekularmasse oberhalb 1200 und höchstens gleich 10 000 hat,

(iii) wobei die Polyoxyalkylendiamin(e) und Polyoxyalkylendicarbonsäure(n) ausgewählt sind aus der Gruppe, bestehend aus:

+ den Polyoxyethylendiaminen, Polyoxypropylendiaminen, Polyoxytetramethylendiaminen und den Polyoxyethylendicarbonsäuren, Polyoxypropylendicarbonsäuren, Polyoxytetramethylendicarbonsäuren, dargestellt durch die Formel:

$$X—R_1—(OR_2)_n—OR_3—X— \qquad (I)$$

worin bedeuten:

. die Symbole X bedeuten eine $NH_2$-Gruppe oder eine COOH-Gruppe,

. die Symbole $R_1$, $R_2$ und $R_3$ entsprechen den folgenden Definitionen: für die Polyoxyethylenarten ist

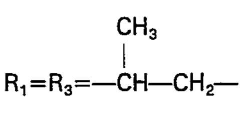

und

$$R_2 = —CH_2—CH_2—;$$

für die Polyoxypropylenarten ist

$$R_1 = R_2 = R_3 = —CH(CH_3)—CH_2—;$$

für die Polyoxytetramethylenarten ist

$$R_1 = R_3 = —CH(CH_3)—CH_2—$$

und

$$R_2 = —CH_2—CH_2—CH_2—CH_2—,$$

. das Symbol n ist eine bestimmte Zahl derart, daß Verbindungen mit Etherbrücken geschaffen werden, die die Spezifikationen als Molekularmasse aufweisen, die vorstehend in den Punkten (i) und (ii) angegeben sind, und

+ die Verbindungen, erhalten durch Reaktion eines Polyoxyalkylendiamins der Formel (I) mit einem Mangel an polymerer Disäure (d) oder einer Polyoxyalkylendicarbonsäure der Formel (I), sowie die Verbindungen, erhalten durch Reaktion einer Polyoxyalkylendicarbonsäure der Formel (I) mit einem Mangel an Aminderivat (d') einer polymeren Disäure oder eines Polyoxyalkylendiamins der Formel (I), wobei die erhaltenen Reaktionsverbindungen die Spezifizierungen hinsichtlich der Molekularmasse haben, die oben für die Punkte (i) und (ii) angegeben sind,

— wobei die Mengenverhältnisse des adäquaten Reaktanten (c) oder (a) ausgewählt sind in Relation mit den Mengenverhältnissen der in der ersten Stufe eingesetzten Reaktanten in der Weise, daß die Zahlen der Gruppen $NH_2$ und COOH, die in dem Reaktionsgemisch der zweiten Stufe vorhanden sind, äquivalent sind.

3. Copolyetheramide gemäß einem der Ansprüche 1 und 2, dadurch gekennzeichnet, daß die polymeren Disäuren (d), die in freiem Zustand oder in Form der Aminderivate (d') angewandt werden, dimere Säuren sind, die eine Fraktion an difunktioneller Säure enthalten, die oberhalb 94 Gew.% ist, eine Fraktion an monofunktioneller Säure, die unterhalb 1 Gew.% ist und eine Fraktion an Säure mit einer Funktionalität oberhalb 2, die unterhalb 5 Gew.% ist.

4. Copolyetheramide gemäß einem der Ansprüche 1 bis 3, dadurch gekennzeichnet, daß die als Katalysator (f) verwendete Sauerstoffsäure (alpha) ist:

— eine mineralische Sauerstoffsäure, ausgewählt unter Schwefligersäure, Schwefelsäure, Hypophosphorigesäure, Phosphorigesäure, Orthophosphorsäure oder Pyrophosphorsäure,

— oder eine organische Sauerstoffsäure, wie:

. die Organosulfonsäuren der Formel:

$$R_4—SO_3H \quad (II),$$

worin $R_4$ bedeutet: einen linearen oder verzweigten Alkylrest mit 1 bis 6 Kohlenstoffatomen; einen Phenylrest, gegebenenfalls substituiert durch 1 bis 3 Alkylreste mit 1 bis 3 Kohlenstoffatomen; einen Phenylalkylrest mit 1 bis 3 Kohlenstoffatomen im Alkylrest, dessen Benzolring gegebenenfalls substituiert sein kann durch 1 bis 3 Alkylreste mit 1 bis 3 Kohlenstoffatomen; oder einen Naphthylrest, gegebenenfalls substituiert durch 1 bis 4 Alkylreste mit 1 bis 3 Kohlenstoffatomen;

. die Organophosphonsäuren der Formel:

$$R_5—P(O)(OH)_2 \quad (III),$$

worin $R_5$ einen Alkylrest, einen Phenylrest oder einen Phenylalkylrest bedeutet, wobei jeder dieser Reste die vorstehend für $R_4$ angegebene Bedeutung hat;

. Organophosphinsäuren der Formel:

$$R_6R_7—P(O)(OH) \quad (IV),$$

worin $R_6$ und $R_7$, die identisch oder verschieden sind, jeweils bedeuten: einen linearen Alkylrest mit 1 bis 3 Kohlenstoffatomen, einen Phenylrest oder einen Phenylalkylrest, wobei jeder der zwei letzteren Reste die vorstehend für $R_4$ angegebene Bedeutung hat;

. die Organophosphonigensäuren der Formel:

$$R_8H—P(O)(OH) \quad (V),$$

worin $R_8$ bedeutet: einen linearen oder verzweigten Alkylrest mit 1 bis 4 Kohlenstoffatomen (die

Verzweigung ist ausgeschlossen für einen Alkylrest mit 4 Kohlenstoffatomen); einen Phenylrest oder einen Phenylalkylrest, wobei jeder der beiden letzteren Reste die vorstehend für $R_4$ angegebene Bedeutung hat.

5. Copolyetheramide gemäß Anspruch 4, dadurch gekennzeichnet, daß man als Sauerstoffsäure (alpha) die von Phosphor abgeleiteten Säuren verwendet, die zur Gruppe der folgenden Säuren: Hypophosphorigesäure, Phosphorigesäure, Orthophosphorsäure, Pyrophosphorsäure, Methylphosphonsäure, Phenylphosphonsäure, Benzylphosphonsäure, Dimethylphosphinsäure, Diphenylphosphinsäure, Methylphenylphosphinsäure, Dibenzylphosphinsäure, Methylphosphonigesäure, Phenylphosphonigesäure oder Benzylphosphonigesäure gehören.

6. Copolyetheramide gemäß einem der Ansprüche 1 bis 3, dadurch gekennzeichnet, daß das als Katalysator (f) verwendete Säuresalz (beta) ausgewählt ist unter den Natrium- und Kaliumsalzen von den vorstehend in Anspruch 4 erwähnten Säuren und vorzugsweise von den von Phosphor abgeleiteten Säuren stammend, die vorstehend in Anspruch 5 genannt sind.

7. Copolyetheramide gemäß einem der Ansprüche 4 bis 6, dadurch gekennzeichnet, daß die Mengenverhältnisse an Sauerstoffsäure (alpha) oder Salz (beta), ausgedrückt in Gewichtsprozent in bezug auf das endgültige Copolyetheramid, zwischen 0,01 und 1% und vorzugsweise zwischen 0,01 und 0,5% liegen.

8. Copolyetheramide gemäß einem der Ansprüche 1 bis 7, dadurch gekennzeichnet, daß sie den Copolymeren entsprechen, die sich von einem Präpolymeren ableiten, das aus den Reaktanten (a)+gegebenenfalls (b)+(c)+(d) oder (d') oder (e') hergestellt ist.

9. Copolyetheramide gemäß Anspruch 8, dadurch gekennzeichnet, daß man von Reaktanten (a)+(c)+(d) oder (d')+(e) oder (e') ausgeht.

10. Copolyetheramide gemäß einem der Ansprüche 1 bis 9, dadurch gekennzeichnet, daß die Gewichtsverhältnisse der Amidblöcke in den Endpolymeren zwischen 15 und 85% und vorzugsweise zwischen 40 und 60% betragen und die Gewichtsverhältnisse der Etherblöcke zwischen 85 und 15% und vorzugsweise zwischen 60 und 40% betragen.

**Patentansprüche für den Vertragsstaat: AT**

1. Verfahren zur Herstellung von Copolyétheramiden mit Blockstruktur, hergestellt aus Dicarbonsäuren mit kurzer Kette, Diaminen mit kurzer Kette, polymeren Disäuren oder ihren Aminderivaten und Polyoxyalkylendiaminen oder Polyoxyalkylendicarbonsäuren, wobei diese Copolyetheramide homogen sind und insbesondere einen Schmelzpunkt oder Erweichungspunkt mindestens gleich 150°C, eine Glasübergangstemperatur, gemessen bei EHO, höchstens gleich −5°C und eine Schmelzviskosität mindestens gleich 100 Poise haben, dadurch gekennzeichnet, daß man die durch die folgenden Punkte definierte Arbeitsweise einsetzt:

in einer ersten Stufe stellt man ein Präpolymeres durch Erhitzen der Reaktanten her, bestehend aus:

— entweder einem Gemisch der im folgenden angegebenen Arten:

(a) mindestens eine gesättigte, aliphatische Dicarbonsäure mit kurzer Kette mit 2 bis 7 Kohlenstoffatomen,

(b) gegebenenfalls mindestens eine Dicarbonsäure mit kurzer Kette von gesättigter, cycloaliphatischer oder aromatischer Natur mit höchstens 16 Kohlenstoffatomen,

(c) mindestens ein gesättigtes, aliphatisches, primäres Diamin mit kurzer Kette mit 2 bis 7 Kohlenstoffatomen, und

(d) mindestens eine polymere Disäure, bestehend aus einer dimeren Säure, erhalten durch Fraktionierung einer hydrierten Zusammensetzung, stammend von der katalytischen Polymerisation von monomerer(n) Fettsäure(n) mit 18 Kohlenstoffatomen, oder (d') mindestens einem Aminderivat der polymeren Disäure oder (e') mindestens einer Polyoxyalkylendicarbonsäure,

wobei die Mengenverhältnisse der Reaktanten (a), gegebenenfalls (b) und (c), derart ausgewählt sind, daß die Zahlen der Gruppen $NH_2$ und COOH äquivalent eingebracht werden,

— oder einem Gemisch wenigstens eines Salzes, stammend von den Reaktanten (a)+gegebenenfalls (b)+(c) mit dem Reaktanten (d) oder (d') oder (e');

dann wird in einer zweiten Stufe das Präpolymere, welches bei einer Temperatur mindestens gleich der Polymerisationstemperatur gehalten wird, reagieren gelassen:

— entweder im Falle, daß das Präpolymere hergestellt wird aus polymerer(n) Disäure(n) (d), mit (e) wenigstens einem Polyoxyalkylendiamin,

— oder im Falle, daß das Präpolymere hergestellt wird ausgehend von Aminderivat(en) der polymeren Disäure(n) (d'), mit (e') wenigstens einer Polyoxyalkylendicarbonsäure,

— oder im Falle, daß das Präpolymere hergestellt wird ausgehend von Polyoxyalkylendicarbonsäure(n) (e'), mit (d') wenigstens einem Aminderivat der polymeren Disäure,

— wobei diese Reaktion während einer ausreichenden Zeitdauer durchgeführt wird, um das Copolymere mit den gewünschten Eigenschaften zu erhalten, in Gegenwart eines Katalysators (f), der entweder aus einer Verbindung (alpha) oder einer Verbindung (beta) besteht, wobei (alpha) eine mineralische oder eine organische Sauerstoffsäure, anders als eine Carbonsäure, ist, wovon wenigstens eine der Säurefunktionen, wenn es mehrere gibt, eine Ionisationskonstante pka in Wasser bei 25°C gleich oder unter 4 hat, und (beta) ein Alkali- oder Erdalkalisalz dieser Säure bedeutet,

— wobei der Reaktant mit Etherbrücken (e) oder (e') besteht:

(i) entweder aus einem oder mehreren Polyoxyalkylendiamin(en) oder aus einer oder mehreren Polyoxyalkylendicarbonsäure(n), die jeweils einerseits eine zahlenmittlere Molekularmasse haben, welche in dem Bereich von 400 bis 1000 liegt, und andererseits höchstens 10 Gew.% Ketten mit einer Molekularmasse oberhalb 1000,

(ii) oder aus einem Gemisch eines oder mehrerer Polyoxyalkylendiamins(e) oder einer oder mehrerer Polyoxyalkylendicarbonsäure(n), wie sie unter (i) definiert sind, mit höchstens 10 Gew.% in bezug auf das Gemisch eines oder mehrerer Polyoxyalkylendiamins(e) der gleichen Natur oder einer oder mehrerer Polyoxyalkylendicarbonsäure(n) der gleichen Natur, wobei jedes eine zahlenmittlere Molekularmasse größer als 1200 und höchstens gleich 10 000 hat,

(iii) wobei das oder die Polyoxyalkylendiamin(e) und Polyoxyalkylendicarbonsäure(n) ausgewählt sind aus der Gruppe, gebildet aus:

+ den Polyoxyethylendiaminen, Polyoxypropylendiaminen, Polyoxytetramethylendiaminen und den Polyoxyethylendicarbonsäuren, Polyoxypropylendicarbonsäuren, Polyoxytetramethylendicarbonsäuren, dargestellt durch die Formel:

$$X—R_1—(OR_2)_n—OR_3—X— \qquad (I)$$

worin bedeuten:

. die Symbole X bedeuten eine $NH_2$-Gruppe oder eine COOH-Gruppe,

. die Symbole $R_1$, $R_2$ und $R_3$ entsprechen den folgenden Definitionen: für die Polyoxyethylenarten ist

$$R_1=R_3=—\underset{}{\overset{CH_3}{\overset{|}{C}H}}—CH_2—$$

und

$$R_2=—CH_2—CH_2—;$$

für die Polyoxypropylenarten ist

$$R_1=R_2=R_3=—\overset{CH_3}{\overset{|}{C}H}—CH_2—;$$

für die Polyoxytetramethylenarten ist

$$R_1=R_3=—\overset{CH_3}{\overset{|}{C}H}—CH_2—$$

und

$$R_2=—CH_2—CH_2—CH_2—CH_2—,$$

. das Symbol n ist eine bestimmte Zahl, so daß Verbindungen mit Etherbrücken geschaffen werden, welche die Spezifizierungen in Molekularmasse haben, die vorstehend in den Punkten (i) und (ii) angegeben sind, und

+ die Verbindungen, erhalten durch Reaktion eines Polyoxyalkylendiamins der Formel (I) mit einem Mangel an polymerer Disäure (d) oder einer Polyoxyalkylendicarbonsäure der Formel (I), sowie die Verbindungen, erhalten durch Reaktion einer Polyoxyalkylendicarbonsäure der Formel (I) mit einem Mangel an Aminderivat (d') einer polymeren Disäure oder eines Polyoxyalkylendiamins der Formel (I), wobei die erhaltenen Reaktionsprodukte die Spezifizierungen hinsichtlich der Molekularmasse haben, wie sie oben in den Punkten (i) und (ii) angegeben sind,

— die Mengenverhältnisse des adäquaten Reaktanten (e) oder (e') oder (d') sind in Relation mit den Mengenverhältnissen der in der ersten Stufe eingesetzten Reaktanten derart gewählt, daß die Zahlen der $NH_2$-Gruppen und COOH-Gruppen, die in dem Reaktionsgemisch der zweiten Stufen vorhanden sind, äquivalent sind.

2. Verfahren zur Herstellung von Copolyetheramiden mit Blockstruktur, hergestellt aus Dicarbonsäuren mit kurzer Kette, Diaminen mit kurzer Kette, polymeren Disäuren oder ihren Aminderivaten und Polyoxyalkylendiaminen oder Polyoxyalkylendicarbonsäuren, wobei diese Copolyetheramide homogen sind und insbesondere einen Schmelz- oder Erweichungspunkt von mindestens gleich 150°C, eine Glasübergangstemperatur, gemessen bei EHO, von höchstens gleich −5°C und eine Schmelzviskosität von mindestens gleich 100 Poise aufweisen, wobei diese Copolyetheramide dadurch gekennzeichnet sind, daß sie homogen und in der Lage sind, in Übereinstimmung mit der in den folgenden Punkten definierten Arbeitsweise hergestellt zu werden:

. in einer ersten Stufe stellt man ein Präpolymeres durch Erhitzen der Reaktanten her, die aus den folgenden Mischungen bestehen:

— ($m_1$) entweder:

(a) mindestens eine gesättigte, aliphatische Dicarbonsäure mit kurzer Kette mit 2 bis 7 Kohlenstoffatomen,

(b) gegebenenfalls mindestens eine Dicarbonsäure mit kurzer Kette gesättigter, cyclialiphatischer oder aromatischer Natur mit höchstens 16 Kohlenstoffatomen,

(d) mindestens eine polymere Disäure, bestehend in einer dimeren Säure, erhalten durch Fraktionierung einer hydrierten Zusammensetzung, stammend von der katalytischen Polymerisation von monomerer(n) Fettsäure(n) mit 18 Kohlenstoffatomen, und

(e) mindestens ein Polyoxyalkylendiamin,

— ($m_2$) oder:

der vorerwähnte Reaktionsteilnehmer (a), gegebenenfalls der vorerwähnte Reaktionsteilnehmer (b), (d') mindestens ein Aminderivat einer polymeren Disäure, und

(e') mindestens eine Polyoxyalkylendicarbonsäure,

— ($m_3$) oder:

gegebenenfalls die vorerwähnte Reaktionskomponente (b), (c) mindestens ein gesättigtes, aliphatisches, primäres Diamin mit kurzer Kette mit 2 bis 7 Kohlenstoffatomen, die vorerwähnte Reaktionskomponente (d), und die vorerwähnte Reaktionskomponente (e),

— ($m_4$) oder:

gegebenenfalls die vorerwähnte Reaktionskomponente (b), die vorerwähnte Reaktionskomponente (c), die vorerwähnte Reaktionskomponente (d') und die vorerwähnte Reaktionskomponente (e'),

— wobei die Sätze der Reaktionsteilnehmer (d), (e) und gegebenenfalls (b) oder (d'), (e') und gegebenenfalls (b) derart gewählt sind, daß die Zahlen der Gruppen $NH_2$ und COOH äquivalent eingebracht werden;

. dann läßt man in einer zweiten Stufe das Präpolymere, das bei einer Temperatur gehalten wird, die mindestens gleich der Präpolymerisationstemperatur ist, reagieren mit

— entweder im Falle, daß das Präpolymere hergestellt ist aus Mischungen ($m_1$) oder ($m_2$), mit dem vorerwähnten Reaktionsteilnehmer (c),

oder im Falle, daß das Präpolymere hergestellt ist aus Mischungen ($m_3$) oder ($m_4$), mit dem vorerwähnten Reaktionsteilnehmer (a),

— wobei diese Reaktion während einer genügenden Zeitdauer durchgeführt wird, um das Copolymere mit den gewünschten Eigenschaften zu erhalten, in Gegenwart eines Katalysators (f), der entweder aus einer Verbindung (alpha) oder aus einer Verbindung (beta) besteht, wobei (alpha) eine mineralische oder organische Sauerstoffsäure, anders als eine Carbonsäure, bedeutet, wovon wenigstens eine der Säurefunktionen, wenn es mehrere gibt, eine Ionisationskonstante pka in Wasser bei 25°C gleich oder unter 4 besitzt, (beta) ein Alkali- oder Erdalkalisalz dieser Säure bedeutet,

— wobei der Reaktionsteilnehmer mit Etherbrücken (e) oder (e') besteht aus:

(i) entweder aus einem oder mehreren Polyoxyalkylendiamin(en) oder einer oder mehreren Polyoxyalkylendicarbonsäure(n), die jeweils einerseits eine zahlenmittlere Molekularmasse im Bereich von 400 bis 1000 haben und andererseits höchstens 10 Gew.% Ketten mit einer Molekularmasse oberhalb 1000 haben,

(ii) oder aus einem Gemisch von einem oder mehreren Polyoxyalkylendiamin(en) oder einer oder mehrerer Polyoxyalkylendicarbonsäure(n), wie sie unter (i) definiert sind, mit höchstens 10 Gew.% in bezug auf das Gemisch, eines oder mehrerer Polyoxyalkylendiamin(e) der gleichen Natur oder einer oder mehrerer Polyoxyalkylendicarbonsäure(n) der gleichen Natur, wobei jede eine zahlenmittlere Molekularmasse oberhalb 1200 und höchstens gleich 10 000 hat,

(iii) wobei die Polyoxyalkylendiamin(e) und Polyoxyalkylendicarbonsäure(n) ausgewählt sind aus der Gruppe, bestehend aus:

+ den Polyoxyethylendiaminen, Polyoxypropylendiaminen, Polyoxytetramethylendiaminen und den Polyoxyethylendicarbonsäuren, Polyoxypropylendicarbonsäuren, Polyoxytetramethylendicarbonsäuren, dargestellt durch die Formel:

$$X—R_1—(OR_2)_n—OR_3—X— \qquad (I)$$

worin bedeuten:

. die Symbole X bedeuten eine $NH_2$-Gruppe oder eine COOH-Gruppe,

. die Symbole $R_1$, $R_2$ und $R_3$ entsprechen den folgenden Definitionen: für die Polyoxyethylenarten ist

$$R_1=R_3=—\underset{}{\overset{CH_3}{\overset{|}{C}H}}—CH_2—$$

und

$$R_2=-CH_2-CH_2-;$$

für die Polyoxypropylenarten ist

$$R_1=R_2=R_3=-\overset{\displaystyle CH_3}{\overset{|}{C}H}-CH_2-;$$

für die Polyoxytetramethylenarten ist

$$R_1=R_3=-\overset{\displaystyle CH_3}{\overset{|}{C}H}-CH_2-$$

und

$$R_2=-CH_2-CH_2-CH_2-CH_2-,$$

. das Symbol n ist eine bestimmte Zahl derart, daß Verbindungen mit Etherbrücken geschaffen werden, die die Spezifikationen als Molekularmasse aufweisen, die vorstehend in den Punkten (i) und (ii) angegeben sind, und

+ die Verbindungen, erhalten durch Reaktion eines Polyoxyalkylendiamins der Formel (I) mit einem Mangel an polymerer Disäure (d) oder einer Polyoxyalkylendicarbonsäure der Formel (I), sowie die Verbindungen, erhalten durch Reaktion einer Polyoxyalkylendicarbonsäure der Formel (I) mit einem Mangel an Aminderivat (d') einer polymeren Disäure oder eines Polyoxyalkylendiamins der Formel (I), wobei die erhaltenen Reaktionsverbindungen die Spezifizierungen hinsichtlich der Molekularmasse haben, die oben für die Punkte (i) und (ii) angegeben sind,

— wobei die Mengenverhältnisse des adäquaten Reaktanten (c) oder (a) ausgewählt sind in Relation mit den Mengenverhältnissen der in der ersten Stufe eingesetzten Reaktanten in der Weise, daß die Zahlen der Gruppen $NH_2$ und COOH, die in dem Reaktionsgemisch der zweiten Stufe vorhanden sind, äquivalent sind.

3. Verfahren gemäß einem der Ansprüche 1 und 2, dadurch gekennzeichnet, daß die polymeren Disäuren (d), die in freiem Zustand oder in Form der Aminderivate (d') angewandt werden, dimere Säuren sind, die eine Fraktion an difunktioneller Säure enthalten, die oberhalb 94 Gew.% ist, eine Fraktion an monofunktioneller Säure, die unterhalb 1 Gew.% ist und eine Fraktion an Säure mit einer Funktionalität oberhalb 2, die unterhalb 5 Gew.% ist.

4. Verfahren gemäß einem der Ansprüche 1 bis 3, dadurch gekennzeichnet, daß die als Katalysator (f) verwendete Sauerstoffsäure (alpha) ist:

— eine mineralische Sauerstoffsäure, ausgewählt unter Schwefligersäure, Schwefelsäure, Hypophosphorigesäure, Phosphorigesäure, Orthophosphorsäure oder Pyrophosphorsäure,

— oder eine organische Sauerstoffsäure, wie:

. die Organosulfonsäuren der Formel:

$$R_4-SO_3H \qquad (II),$$

worin $R_4$ bedeutet: einen linearen oder verzweigten Alkylrest mit 1 bis 6 Kohlenstoffatomen; einen Phenylrest, gegebenenfalls substituiert durch 1 bis 3 Alkylreste mit 1 bis 3 Kohlenstoffatomen; einen Phenylalkylrest mit 1 bis 3 Kohlenstoffatomen im Alkylrest, dessen Benzolring gegebenenfalls substituiert sein kann durch 1 bis 3 Alkylreste mit 1 bis 3 Kohlenstoffatomen; oder einen Naphthylrest, gegebenenfalls substituiert durch 1 bis 4 Alkylreste mit 1 bis 3 Kohlenstoffatomen;

. die Organophosphonsäuren der Formel:

$$R_5-P(O)(OH)_2 \qquad (III),$$

worin $R_5$ einen Alkylrest, einen Phenylrest oder einen Phenylalkylrest bedeutet, wobei jeder dieser Reste die vorstehend für $R_4$ angegebene Bedeutung hat;

. Organophosphinsäuren der Formel:

$$R_6R_7-P(O)(OH) \qquad (IV),$$

worin $R_6$ und $R_7$, die identisch oder verschieden sind, jeweils bedeuten: einen linearen Alkylrest mit 1 bis 3 Kohlenstoffatomen, einen Phenylrest oder einen Phenylalkylrest, wobei jeder der zwei letzteren Reste die vorstehend für $R_4$ angegebene Bedeutung hat;

. die Organophosphonigensäuren der Formel:

$$R_8H-P(O)(OH) \qquad (V),$$

worin $R_8$ bedeutet: einen linearen oder verzweigten Alkylrest mit 1 bis 4 Kohlenstoffatomen (die

Verzweigung ist ausgeschlossen für einen Alkylrest mit 4 Kohlenstoffatomen); einen Phenylrest oder einen Phenylalkylrest, wobei jeder der beiden letzteren Reste die vorstehend für $R_4$ angegebene Bedeutung hat.

5. Verfahren gemäß Anspruch 4, dadurch gekennzeichnet, daß man als Sauerstoffsäure (alpha) die von -Phosphor abgeleiteten Säuren verwendet, die zur Gruppe der folgenden Säuren: Hypophosphorigesäure, Phosphorigesäure, Orthophosphorsäure, Pyrophosphorsäure, Methylphosphonsäure, Phenylphosphonsäure, Benzylphosphonsäure, Dimethylphosphinsäure, Diphenylphosphinsäure, Methylphenylphosphinsäure, Dibenzylphosphinsäure, Methylphosphonigesäure, Phenylphosphonigesäure oder Benzylphosphonigesäure gehören.

6. Verfahren gemäß einem der Ansprüche 1 bis 3, dadurch gekennzeichnet, daß das als Katalysator (f) verwendete Säuresalz (beta) ausgewählt ist unter den Natrium- und Kaliumsalzen von den vorstehend in Anspruch 4 erwähnten Säuren und vorzugsweise von den von Phosphor abgeleiteten Säuren stammend, die vorstehend in Anspruch 5 genannt sind.

7. Verfahren gemäß einem der Ansprüche 4 bis 6, dadurch gekennzeichnet, daß die Mengenverhältnisse an Sauerstoffsäure (alpha) oder Salz (beta), ausgedrückt in Gewichtsprozent in bezug auf das endgültige Copolyetheramid, zwischen 0,01 und 1% und vorzugsweise zwischen 0,01 und 0,5% liegen.

8. Verfahren gemäß einem der Ansprüche 1 bis 7, dadurch gekennzeichnet, daß die Copolymeren von einem Präpolymeren stammen, das ausgehend von den Reaktanten (a)+gegebenenfalls (b)+(c)+(d) oder (d') oder (e') hergestellt ist.

9. Verfahren nach Anspruch 8, dadurch gekennzeichnet, daß man von den Reaktanten (a)+(c)+(d) oder (d')+(e) oder (e') ausgeht.

10. Verfahren nach einem der Ansprüche 1—9, dadurch gekennzeichnet, daß die Gewichtsverhältnisse der Amidblöcke in den Endpolymeren zwischen 15 und 85%, vorzugsweise zwischen 40 und 60% und die Gewichtsverhältnisse der Etherblöcke zwischen 85 und 15%, vorzugsweise zwischen 60 und 40%, liegen.

**Claims for the Contracting States: BE, CH, DE, GB, IT, LI, LU, NL, SE**

1. Copolyetheramides with a block structure, prepared from short-chain dicarboxylic acids, from short-chain diamines, from polymeric diacids or from their amino derivatives and from polyoxyalkylenediamines or polyoxyalkylenedicarboxylic acids, having, in particular, a melting or softening point of at least 150°C, a glass transition temperature, measured at 0 RH, not exceeding −5°C and a melt viscosity of at least 100 poises, the said copolyetheramides being characterized in that they are homogeneous and in that they are capable of being produced in accordance with the operating procedure defined by the following points:

— in a first step, a prepolymer is prepared by heating reactants consisting:

— either of a mixture of the following species:

(a)—at least one short-chain saturated aliphatic dicarboxylic acid containing from 2 to 7 carbon atoms,

(b) optionally at least one dicarboxylic acid with a short-chain of a saturated alicyclic or aromatic type containing at most 16 carbon atoms,

(c)—at least one short-chain saturated primary aliphatic diamine containing from 2 to 7 carbon atoms, and

(d)—at least one polymeric diacid consisting of a dimeric acid obtained by fractionating a hydrogenated composition originating from catalytic polymerization of monomeric fatty acid(s) containing 18 carbon atoms or (d') at least one amino derivative of a polymeric diacid or (e') at least one polyoxyalkylenedicarboxylic acid,

the proportions of the reactants (a), and optionally (b) and (c), being chosen so as to make the numbers of $NH_2$ and COOH groups equivalent,

— or of the mixture of at least one salt derived from the reactants (a)+optionally (b)+(c) with the reactant (d) or (d') or (e');

— then, in a second step, the prepolymer, which is maintained at a temperature at least equal to the polymerization temperature, is reacted:

— either, in the case where the prepolymer is prepared from polymeric diacid(s) (d), with (e) at least one polyoxyalkylenediamine,

— or, in the case where the prepolymer is prepared from amino derivative(s) of polymeric diacid(s) (d'), with (e') at least one polyoxyalkylenedicarboxylic acid,

— or, in the case where the prepolymer is prepared from polyoxyalkylenedicarboxylic acid(s) (e'), with (d') at least one amino derivative of a polymeric diacid,

— this reaction being carried out, for a sufficient period to obtain the copolymer with the required properties, in the presence of a catalyst (f) consisting either of a compound (alpha), or of a compound (beta), (alpha) denoting an inorganic oxyacid or an organic oxyacid other than a carboxylic acid, in which at least one of the acid functions, when there are several of these, has an ionization constant $pK_a$ in water at 25°C not exceeding 4, (beta) denoting an alkali metal or alkaline earth metal salt of this acid,

— the reactant containing ether bridges (e) or (e') consisting:

(i)—either of one or more polyoxyalkylenediamine(s) or of one or more polyoxyalkylenedicarboxylic acid(s), each having, on the one hand, a number-average molecular mass which is in the range from 400 to

1000 and, on the other hand, at most 10% by weight of the chains having a molecular mass greater than 1000,

(ii)—or of a mixture of one or more polyoxyalkylenediamine(s) or of one or more polyoxyalkylenedicarboxylic acid(s) such as specified under (i) with at most 10% by weight relative to the mixture, respectively, of one or more polyoxyalkylenediamine(s) of the same kind or of one or more polyoxyalkylenedicarboxylic acid(s) of the same kind, each having a number-average molecular mass greater than 1200 and not exceeding 10,000,

(iii)—the said polyoxyalkylenediamine(s) and polyoxyalkylenedicarboxylic acid(s) being chosen from the group formed by:

— polyoxyethylenediamines, polyoxypropylenediamines, polyoxytetramethylenediamines; and polyoxyethylenedicarboxylic, polyoxypropylenedicarboxylic and polyoxytetramethylenedicarboxylic acids denoted by the formula:

$$X-R_1-(OR_2)_n-OR_3-X-$$

in which:

— the symbols X denote an $NH_2$ group or a COOH group,

— the symbols $R_1$, $R_2$ and $R_3$ correspond to the following definitions: in the case of the polyoxyethylene species

$$R_1=R_3=-\overset{\overset{\displaystyle CH_3}{|}}{C}H-CH_2-$$

and

$$R_2=-CH_2-CH_2-;$$

in the case of the polyoxypropylene species

$$R_1=R_2=R_3=-\overset{\overset{\displaystyle CH_3}{|}}{C}H-CH_2-;$$

in the case of the polyoxytetramethylene species

$$R_1=R_3=-\overset{\overset{\displaystyle CH_3}{|}}{C}H-CH_2-$$

and

$$R_2=-CH_2-CH_2-CH_2-CH_2,$$

— the symbol n is a number determined so as to provide ether-bridged compounds having the molecular mass specifications stated above in points (i) and (ii), and

— the compounds obtained by the reaction of a polyoxyalkylenediamine of formula (I) with a deficiency of a polymeric diacid (d) or of a polyoxyalkylenedicarboxylic acid of formula (I), and, further, as well as the compounds obtained by the reaction of a polyoxyalkylenedicarboxylic acid of formula (I) with a deficiency of an amino derivative (d') of a polymeric diacid or of a polyoxyalkylenediamine of formula (I), the said reaction compounds obtained having the molecular mass specifications indicated above in points (i) and (ii),

— the proportions of the suitable reactant (e) or (e') or (d') being chosen in relation to the proportions of the reactants employed in the first step so that the numbers of $NH_2$ and COOH groups present in the reaction mixture in the second step are equivalent.

2. Copolyetheramides with a block structure, prepared from short-chain dicarboxylic acids, from short-chain diamines, from polymeric diacids or from their amino derivatives and from polyoxyalkylenediamines or polyoxyalkylenedicarboxylic acids, having, in particular, a melting or softening point which is at least 150°C, a glass transition temperature, measured at 0 RH, not exceeding −5°C and a melt viscosity of at least 100 poises, the said copolyetheramides being characterized in that they are homogeneous and that they are capable of being obtained in accordance with the operating procedure defined by the following points:

— in a first step, a prepolymer is prepared by heating reactants consisting of the following mixtures:

— ($m_1$) namely:

(a) at least one short-chain saturated aliphatic dicarboxylic acid, containing from 2 to 7 carbon atoms,

(b) optionally at least one short-chain dicarboxylic acid of a saturated alicyclic or aromatic nature containing at most 16 carbon atoms,

(d) at least one polymeric diacid consisting of a dimeric acid obtained by fractionating a hydrogenated composition originating from catalytic polymerization of monomeric fatty acid(s) containing 18 carbon atoms and

(e) at least one polyoxyalkylenediamine,
— ($m_2$) namely:
the abovementioned reactant (a), optionally the abovementioned reactant (b),
(d') at least one amino derivative of a polymeric diacid, and
(e') at least one polyoxyalkylenedicarboxylic acid,
— ($m_3$) namely:
optionally the abovementioned reactant (b),
(c) at least one short-chain saturated primary aliphatic diamine containing from 2 to 7 carbon atoms,
the abovementioned reactant (d), and
the abovementioned reactant (e),
— ($m_4$) namely:
optionally the abovementioned reactant (b),
the abovementioned reactant (c),
the abovementioned reactant (d') and
the abovementioned reactant (e'),

— the proportions of reactants (d), (e) and optionally (b) or (d'), (e') and optionally (b) being chosen so as to make the numbers of $NH_2$ and COOH groups equivalent;

— then, in a second step, the prepolymer, maintained at a temperature which is at least equal to the prepolymerization temperature, is reacted:

— either, in the case where the prepolymer is prepared from the mixtures ($m_1$) or ($m_2$), with the abovementioned reactant (c),

— or, in the case where the prepolymer is prepared from the mixtures ($m_3$) or ($m_4$), with the abovementioned reactant (a),

— this reaction being carried out for a sufficient time to obtain the copolymer having the required properties, in the presence of a catalyst (f) consisting either of a compound (alpha), or of a compound (beta), (alpha) denoting an inorganic oxyacid or an organic oxyacid other than a carboxylic acid, in which at least one of the acid groups, when there are several of these, has an ionization constant $pK_a$ in water at 25°C which does not exceed 4, (beta) denoting an alkali metal or alkaline earth metal salt of this acid,

— the ether-bridged reactant (e) or (e') consisting:

(i)—either of one or more polyoxyalkylenediamine(s) or of one or more polyoxyalkylenedicarboxylic acid(s), each having, on the one hand, a number-average molecular mass which lies in the range from 400 to 1000 and, on the other hand, not more than 10% by weight of the chains having a molecular mass greater than 1000,

(ii)—or of a mixture of one or more polyoxyalkylenediamine(s) or of one or more polyoxyalkylenedicarboxylic acid(s) such as defined under (i) with at most 10% by weight relative to the mixture, respectively, of one or more polyoxyalkylenediamine(s) of the same kind or of one or more polyoxyalkylenedicarboxylic acid(s) of the same kind, each having a number-average molecular mass greater than 1200 and not exceeding 10,000,

(iii)—the said polyoxyalkylenediamine(s) and polyoxyalkylenedicarboxylic acid(s) being chosen from the group formed by:

— polyoxyethylenediamines, polyoxypropylenediamines, polyoxytetramethylenediamines; and polyoxyethylenedicarboxylic, polyoxypropylenedicarboxylic and polyoxytetramethylenedicarboxylic acids denoted by the formula:

$$X—R_1—(OR_2)_n—OR_3—X—$$

in which:

— the symbols X denote an $NH_2$ group or a COOH group,

— the symbols $R_1$, $R_2$ and $R_3$ correspond to the following definitions: in the case of the polyoxyethylene species

$$R_1=R_3=—\underset{\displaystyle CH_3}{\overset{}{CH}}—CH_2—$$

$$R_1=R_3=—CH—\overset{\displaystyle CH_3}{\overset{|}{CH_2}}—$$

and

$$R_2=—CH_2—CH_2—;$$

in the case of the polyoxypropylene species

$$R_1=R_2=R_3=—\overset{\displaystyle CH_3}{\overset{|}{CH}}—CH_2—;$$

in the case of the polyoxytetramethylene species

$$R_1=R_3=-CH(CH_3)-CH_2-$$

and

$$R_2=-CH_2-CH_2-CH_2-CH_2,$$

— the symbol n is a number determined so as to provide ether-bridged compounds having the molecular mass specifications stated above in points (i) and (ii), and

— the compounds obtained by the reaction of a polyoxyalkylenediamine of formula (I) with a deficiency of a polymeric diacid (d) or of a polyoxyalkylenedicarboxylic acid of formula (I), and, further, as well as the compounds obtained by the reaction of a polyoxyalkylenedicarboxylic acid of formula (I) with a deficiency of an amino derivative (d') of a polymeric diacid or of a polyoxyalkylenediamine of formula (I), the said reaction compounds obtained having the molecular mass specifications indicated above in points (i) and (ii),

— the proportions of the suitable reactant (c) or (a) being chosen in relation to the proportions of the reactants used in the first step so that the numbers of $NH_2$ and COOH groups present in the reaction mixture in the second step are equivalent.

3. Copolyetheramides according to either of Claims 1 and 2, characterized in that the polymeric diacids (d) used in the free state or in the form of amino derivatives (d') are dimeric acids comprising a difunctional acid fraction which is greater than 94% by weight, a monofunctional acid fraction which is below 1% by weight and a fraction of acid with a functionality greater than 2 which is less than 5% by weight.

4. Copolyetheramides according to any one of Claims 1 to 3, characterized in that oxyacid (alpha) employed as a catalyst (f) is:

— an inorganic oxyacid chosen from sulphurous, sulphuric, hypophosphorus, phosphorus, orthophosphoric or pyrophosphoric acids,

— or an organic oxyacid chosen from:

— the organosulphonic acids of formula:

$$R_4-SO_3H \qquad (III)$$

in which $R_4$ denotes: a straight-chain or branched alkyl radical containing from 1 to 6 carbon atoms; a phenyl radical optionally substituted by 1 to 3 alkyl radicals containing from 1 to 3 carbon atoms; a phenylalkyl radical containing from 1 to 3 carbon atoms in the alkyl moiety and in which the benzene nucleus may optionally be substituted by 1 to 3 alkyl radicals containing from 1 to 3 carbon atoms; or a naphthyl radical optionally substituted by 1 to 4 alkyl radicals containing from 1 to 3 carbon atoms;

— the organophosphonic acids of formula:

$$R_5-P(O)(OH)_2 \qquad (III)$$

in which $R_5$ denotes an alkyl radical, a phenyl radical or a phenylalkyl radical, each of these radicals having the definition given above for $R_4$;

— the organophosphinic acids of formula:

$$R_6R_7-P(O)(OH) \qquad (IV)$$

in which $R_6$ and $R_7$, which are identical or different, each denote: a straight-chain alkyl radical containing from 1 to 3 carbon atoms; a phenyl radical or a phenylalkyl radical, both of these latter radicals having the definition given above for $R_4$;

— the organophosphonous acids of formula:

$$R_8H-P(O)(OH) \qquad (V)$$

in which $R_8$ denotes: a straight-chain or branched alkyl radical containing from 1 to 4 carbon atoms (branching being excluded for an alkyl radical containing 4 carbon atoms); a phenyl radical or a phenylalkyl radical, both of these two latter radicals having the definition given above for $R_4$.

5. Copolyetheramides according to Claim 4, characterized in that use is made, as the oxyacid (alpha), of the phosphorus-derived acids belonging to the group of hypophosphorus, phosphorus, orthophosphoric, pyrophosphoric, methylphosphonic, phenylphosphonic, benzylphosphonic, dimethylphosphinic, diphenylphosphinic, methylphenylphosphinic, dibenzylphosphinic, methylphosphonous, phenylphosphonous or benzylphosphonous acids.

6. Copolyetheramides according to any one of Claims 1 to 3, characterized in that the acid salt (beta) employed as a catalyst (f) is chosen from the sodium and potassium salts derived from the acids mentioned above in Claim 4, and, preferably, derived from the phosphorus-derived acids mentioned above in Claim 5.

7. Copolyetheramides according to any one of Claims 4 to 6, characterized in that the proportions of

oxyacid (alpha) or of salt (beta) expressed as a weight percentage relative to the final copolyetheramide, are between 0.01 and 1% and, preferably, between 0.01 and 0.5%.

8. Copolyetheramides according to any one of Claims 1 to 7, characterized in that they correspond to the copolymers derived from a prepolymer prepared from the reactants (a)+optionally (b)+(c)+(d) or (d') or (e').

9. Copolyetheramides according to Claim 8, characterized in that the starting materials are the reactants (a)+(c)+(d) or (d')+(e) or (e').

10. Copolyetheramides according to any one of Claims 1 to 9, characterized in that the weight proportions of amide blocks in the final polymer are between 15 and 85% and, preferably, between 40 and 60% and the weight proportions of ether blocks and between 85 and 15% and, preferably, between 60 and 40%.

**Claims for the Contracting State: AT**

1. Process for preparing copolyetheramides with a block structure, prepared from short-chain dicarboxylic acids, from short-chain diamines, from polymeric diacids or from their amino derivatives and from polyoxyalkylenediamines or polyoxyalkylenedicarboxylic acids, these copolyetheramides being homogeneous and having, in particular, a melting or softening point of at least 150°C, a glass transition temperature, measured at 0 RH, not exceeding −5°C and a melt viscosity of at least 100 poises, the said process being characterized in that the operating procedure defined by the following points is adopted:

— in a first step, a prepolymer is prepared by heating reactants consisting:

— either of a mixture of the following species:

(a)—at least one short-chain saturated aliphatic dicarboxylic acid containing from 2 to 7 carbon atoms,

(b) optionally at least one dicarboxylic acid with a short-chain of a saturated alicyclic or aromatic type containing at most 16 carbon atoms,

(c)—at least one short-chain saturated primary aliphatic diamine containing from 2 to 7 carbon atoms, and

(d)—at least one polymeric diacid consisting of a dimeric acid obtained by fractionating a hydrogenated composition originating from catalytic polymerization of monomeric fatty acid(s) containing 18 carbon atoms or (d') at least one amino derivative of a polymeric diacid or (e') at least one polyoxyalkylenedicarboxylic acid,

the proportions of the reactants (a), and optionally (b) and (c), being chosen so as to make the numbers of $NH_2$ and COOH groups equivalent,

— or of the mixture of at least one salt derived from the reactants (a)+optionally (b)+(c) with the reactant (d) or (d') or (e');

— then, in a second step, the prepolymer, which is maintained at a temperature at least equal to the polymerization temperature, is reacted:

— either, in the case where the prepolymer is prepared from polymeric diacid(s) (d), with (e) at least one polyoxyalkylenediamine,

— or, in the case where the prepolymer is prepared from amino derivative(s) of polymeric diacid(s) (d'), with (e') at least one polyoxyalkylenedicarboxylic acid,

— or, in the case where the prepolymer is prepared from polyoxyalkylenedicarboxylic acid(s) (e'), with (d') at least one amino derivative of a polymeric diacid,

— this reaction being carried out, for a sufficient period to obtain the copolymer with the required properties, in the presence of a catalyst (f) consisting either of a compound (alpha), or of a compound (beta), (alpha) denoting an inorganic oxyacid or an organic oxyacid other than a carboxylic acid, in which at least one of the acid functions, when there are several of these, has an ionization constant $pK_a$ in water at 25°C not exceeding 4, (beta) denoting an alkali metal or alkaline earth metal salt of this acid,

— the reactant containing ether bridges (e) or (e') consisting:

(i)—either of one or more polyoxyalkylenediamine(s) or of one or more polyoxyalkylenedicarboxylic acid(s), each having, on the one hand, a number-average molecular mass which is in the range rom 400 to 1000 and, on the other hand, at most 10% by weight of the chains having a molecular mass greater than 1000,

(ii)—or of a mixture of one or more polyoxyalkylenediamine(s) or of one or more polyoxyalkylenedicarboxylic acid(s) such as specified under (i) with at most 10% by weight relative to the mixture, respectively, of one or more polyoxyalkylenediamine(s) of the same kind or of one or more polyoxyalkylenedicarboxylic acid(s) of the same kind, each having a number-average molecular mass greater than 1200 and not exceeding 10,000,

(iii)—the said polyoxyalkylenediamine(s) and polyoxyalkylenedicarboxylic acid(s) being chosen from the group formed by:

— polyoxyethylenediamines, polyoxypropylenediamines, polyoxytetramethylenediamines; and polyoxyethylenedicarboxylic, polyoxypropylenedicarboxylic and polyoxytetramethylenedicarboxylic acids denoted by the formula:

$$X—R_1—(OR_2)_n—OR_3—X— \qquad (I)$$

in which:

— the symbols X denote an $NH_2$ group or a COOH group,

— the symbols $R_1$, $R_2$ and $R_3$ correspond to the following definitions: in the case of the polyoxyethylene species

$$\begin{array}{l} \qquad\qquad\quad CH_3 \\ \qquad\qquad\quad | \\ R_1=R_3=-CH-CH_2- \end{array}$$

and

$$R_2=-CH_2-CH_2-;$$

in the case of the polyoxypropylene species

$$\begin{array}{l} \qquad\qquad\qquad\quad CH_3 \\ \qquad\qquad\qquad\quad | \\ R_1=R_2=R_3=-CH-CH_2-; \end{array}$$

in the case of the polyoxytetramethylene species

$$\begin{array}{l} \qquad\qquad\quad CH_3 \\ \qquad\qquad\quad | \\ R_1=R_3=-CH-CH_2- \end{array}$$

and

$$R_2=-CH_2-CH_2-CH_2-CH_2-,$$

— the symbol n is a number determined so as to provide ether-bridged compounds having the molecular mass specifications stated above in points (i) and (ii), and

— the compounds obtained by the reaction of a polyoxyalkylenediamine of formula (I) with a deficiency of a polymeric diacid (d) or of a polyoxyalkylenedicarboxylic acid of formula (I), and, further, as well as the compounds obtained by the reaction of a polyoxyalkylenedicarboxylic acid of formula (I) with a deficiency of an amino derivative (d') of a polymeric diacid or of a polyoxyalkylenediamine of formula (I), the said reaction compounds obtained having the molecular mass specifications indicated above in points (i) and (ii),

— the proportions of the suitable reactant (e) or (e') or (d') being chosen in relation to the proportions of the reactants employed in the first step so that the numbers of $NH_2$ and COOH groups present in the reaction mixture in the second step are equivalent.

2. Process for preparing copolyetheramides with a block structure, prepared from short-chain dicarboxylic acids, from short-chain diamines, from polymeric diacids or from their amino derivatives and from polyoxyalkylenediamines or polyoxyalkylenedicarboxylic acids, these copolyetheramides being homogeneous and having, in particular, a melting or softening point which is at least 150°C, a glass transition temperature, measured at 0 RH, not exceeding −5°C and a melt viscosity of at least 100 poises, the said copolyetheramides being characterized in that they are homogeneous and that they are capable of being obtained in accordance with the operating procedure defined by the following points:

— in a first step, a prepolymer is prepared by heating reactants consisting of the following mixtures:

— ($m_1$) namely:

(a) at least one short-chain saturated aliphatic dicarboxylic acid, containing from 2 to 7 carbon atoms,

(b) optionally at least one short-chain dicarboxylic acid of a saturated alicyclic or aromatic nature containing at most 16 carbon atoms,

(d) at least one polymeric diacid consisting of a dimeric acid obtained by fractionating a hydrogenated composition originating from catalytic polymerization of monomeric fatty acid(s) containing 18 carbon atoms and

(e) at least one polyoxyalkylenediamine,

— ($m_2$) namely:

the abovementioned reactant (a),

optionally the abovementioned reactant (b),

(d') at least one amino derivative of a polymeric diacid, and

(e') at least one polyoxyalkylenedicarboxylic acid,

— ($m_3$) namely:

optionally the abovementioned reactant (b),

(c) at least one short-chain saturated primary aliphatic diamine containing from 2 to 7 carbon atoms,

the abovementioned reactant (d), and

the abovementioned reactant (e),

— ($m_4$) namely:

optionally the abovementioned reactant (b),

the abovementioned reactant (c),
the abovementioned reactant (d') and
the abovementioned reactant (e'),

— the proportions of reactants (d), (e) and optionally (b) or (d'), (e') and optionally (b) being chosen so as to make the numbers of $NH_2$ and COOH groups equivalent;

— then, in a second step, the prepolymer, maintained at a temperature which is at least equal to the prepolymerization temperature, is reacted:

— either, in the case where the prepolymer is prepared from the mixtures ($m_1$) or ($m_2$), with the abovementioned reactant (c),

— or, in the case where the prepolymer is prepared from the mixtures ($m_3$) or ($m_4$), with the abovementioned reactant (a),

— this reaction being carried out for a sufficient time to obtain the copolymer having the required properties, in the presence of a catalyst (f) consisting either of a compound (alpha), or of a compound (beta), (alpha) denoting an inorganic oxyacid or an organic oxyacid other than a carboxylic acid, in which at least one of the acid groups, when there are several of these, has an ionization constant $pK_a$ in water at 25°C which does not exceed 4, (beta) denoting an alkali metal or alkaline earth metal salt of this acid,

— the ether-bridged reactant (e) or (e') consisting:

(i)—either of one or more polyoxyalkylenediamine(s) or of one or more polyoxyalkylenedicarboxylic acid(s), each having, on the one hand, a number-average molecular mass which lies in the range from 400 to 1000 and, on the other hand, not more than 10% by weight of the chains having a molecular mass greater than 1000,

(ii)—or of a mixture of one or more polyoxyalkylenediamine(s) or of one or more polyoxyalkylenedicarboxylic acid(s) such as defined under (i) with at most 10% by weight relative to the mixture, respectively, of one or more polyoxyalkylenediamine(s) of the same kind or of one or more polyoxyalkylenedicarboxylic acid(s) of the same kind, each having a number-average molecular mass greater than 1200 and not exceeding 10,000,

(iii)—the said polyoxyalkylenediamine(s) and polyoxyalkylenedicarboxylic acid(s) being chosen from the group formed by:

— polyoxyethylenediamines, polyoxypropylenediamines, polyoxytetramethylenediamines; and polyoxyethylenedicaroxylic, polyoxypropylenedicarboxylic and polyoxytetramethylenedicarboxylic acids denoted by the formula:

$$X-R_1-(OR_2)_n-OR_3-X- \quad (I)$$

in which:

— the symbols X denote an $NH_2$ group or a COOH group,

— the symbols $R_1$, $R_2$ and $R_3$ correspond to the following definitions: in the case of the polyoxyethylene species

$$R_1=R_3=-\overset{CH_3}{\overset{|}{C}}H-CH_2-$$

and

$$R_2=-CH_2-CH_2-;$$

in the case of the polyoxypropylene species

$$R_1=R_2=R_3=-\overset{CH_3}{\overset{|}{C}}H-CH_2-;$$

in the case of the polyoxytetramethylene species

$$R_1=R_3=-\overset{CH_3}{\overset{|}{C}}H-CH_2-$$

and

$$R_2=-CH_2-CH_2-CH_2-CH_2-,$$

— the symbol n is a number determined so as to provide ether-bridged compounds having the molecular mass specifications stated above in points (i) and (ii), and

— the compounds obtained by the reaction of a polyoxyalkylenediamine of formula (I) with a deficiency of a polymeric diacid (d) or of a polyoxyalkylenedicarboxylic acid of formula (I), and, further, as well as the compounds obtained by the reaction of a polyoxyalkylenedicarboxylic acid of formula (I) with a deficiency of an amino derivative (d') of a polymeric diacid or of a polyoxyalkylenediamine of formula (I),

the said reaction compounds obtained having the molecular mass specifications indicated above in points (i) and (ii),

— the proportions of the suitable reactant (c) or (a) being chosen in relation to the proportions of the reactants used in the first step so that the numbers of $NH_2$ and COOH groups present in the reaction mixture in the second step are equivalent.

3. Process according to either of Claims 1 and 2, characterized in that the polymeric diacids (d) used in the free state or in the form of amino derivatives (d') are dimeric acids comprising a difunctional acid fraction which is greater than 94% by weight, a monofunctional acid fraction which is below 1% by weight and a fraction of acid with a functionality greater than 2 which is less than 5% by weight.

4. Process according to any one of Claims 1 to 3, characterized in that oxyacid (alpha) employed as a catalyst (f) is:

— an inorganic oxyacid chosen from sulphurous, sulphuric, hypophosphorus, phosphorus, orthophosphoric or pyrophosphoric acids,

— or an organic oxyacid chosen from:

— the organosulphonic acids of formula:

$$R_4—SO_3H \qquad (III)$$

in which $R_4$ denotes: a straight-chain or branched alkyl radical containing from 1 to 6 carbon atoms; a phenyl radical optionally substituted by 1 to 3 alkyl radicals containing from 1 to 3 carbon atoms; a phenylalkyl radical containing from 1 to 3 carbon atoms in the alkyl moiety and in which the benzene nucleus may optionally be substituted by 1 to 3 alkyl radicals containing from 1 to 3 carbon atoms; or a naphthyl radical optionally substituted by 1 to 4 alkyl radicals containing from 1 to 3 carbon atoms;

— the organophosphonic acids of formula:

$$R_5—P(O)(OH)_2 \qquad (III)$$

in which $R_5$ denotes an alkyl radical, a phenyl radical or a phenylalkyl radical, each of these radicals having the definition given above for $R_4$;

— the organophosphinic acids of formula:

$$R_6R_7—P(O)(OH) \qquad (IV)$$

in which $R_6$ and $R_7$, which are identical or different, each denote: a straight-chain alkyl radical containing from 1 to 3 carbon atoms; a phenyl radical or a phenylalkyl radical, both of these latter radicals having the definition given above for $R_4$;

— the organophosphonous acids of formula:

$$R_8H—P(O)(OH) \qquad (V)$$

in which $R_8$ denotes: a straight-chain or branched alkyl radical containing from 1 to 4 carbon atoms (branching being excluded for an alkyl radical containing 4 carbon atoms); a phenyl radical or a phenylalkyl radical, both of these two latter radicals having the definition given above for $R_4$.

5. Process according to Claim 4, characterized in that use is made, as the oxyacid (alpha), of the phosphorus-derived acids belonging to the group of hypophosphorous, phosphorous, orthophosphoric, pyrophosphoric, methylphosphonic, phenylphosphonic, benzylphosphonic, dimethylphosphinic, diphenylphosphinic, methylphenylphosphinic, dibenzylphosphinic, methylphosphonous, phenylphosphonous or benzylphosphonous acids.

6. Process according to any one of Claims 1 to 3, characterized in that the acid salt (beta) employed as a catalyst (f) is chosen from the sodium and potassium salts derived from the acids mentioned above in Claim 4, and, preferably, derived from the phosphorus-derived acids mentioned above in Claim 5.

7. Process according to any one of Claims 4 to 6, characterized in that the proportions of oxyacid (alpha) or of salt (beta) expressed as a weight percentage relative to the final copolyetheramide, are between 0.01 and 1% and, preferably, between 0.01 and 0.5%.

8. Process according to any one of Claims 1 to 7, characterized in that the copolymers derive from a prepolymer prepared from the reactants (a)+optionally (b)+(c)+(d) or (d') or (e').

9. Process according to Claim 8, characterized in that the starting materials are the reactants (a)+(c)+(d) or (d')+(e) or (e').

10. Process according to any one of Claims 1 to 9, characterized in that the weight proportions of amide blocks in the final polymer are between 15 and 85% and, preferably, between 40 and 60% and the weight proportions of ether blocks are between 85 and 15% and, preferably, between 60 and 40%.